(19) 

Europäisches
Patentamt
European
Patent Office
Office européen
des brevets

(11) **EP 4 518 517 A1**

(12) **EUROPEAN PATENT APPLICATION**
published in accordance with Art. 153(4) EPC

(43) Date of publication:
**05.03.2025 Bulletin 2025/10**

(21) Application number: **23796818.5**

(22) Date of filing: **27.04.2023**

(51) International Patent Classification (IPC):
*H04W 72/23* (2023.01)   *H04W 72/12* (2023.01)
*H04L 5/00* (2006.01)   *H04L 1/00* (2006.01)

(52) Cooperative Patent Classification (CPC):
**H04L 1/00; H04L 5/00; H04W 72/12; H04W 72/23**

(86) International application number:
**PCT/KR2023/005741**

(87) International publication number:
**WO 2023/211176 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.04.2022  KR 20220052409
11.08.2022  KR 20220100845
19.08.2022  US 202263399647 P

(71) Applicant: **LG Electronics Inc.**
**Yeongdeungpo-gu**
**Seoul 07336 (KR)**

(72) Inventors:
• **CHOI, Seunghwan**
**Seoul 06772 (KR)**
• **YANG, Suckchel**
**Seoul 06772 (KR)**
• **KIM, Seonwook**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR MONITORING SIGNALS IN WIRELESS COMMUNICATION SYSTEM**

(57)    A method and device for monitoring signals in a wireless communication system disclosed in the present application can monitor a PDCCH candidate for a DCI format on the basis of a search space set configuration. The DCI format is monitored on a scheduling cell and schedules PDSCHs or PUSCHs on a plurality of scheduled cells.

【 Fig. 4】

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

An object of the present disclosure is to provide a signal monitoring method for efficiently monitoring a control signal in a wireless communication system and apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for monitoring a signal in a wireless communication system.
In an aspect of the present disclosure, provided herein is a method of monitoring a control signal by a user equipment (UE) in a wireless communication system. The method includes: receiving a search space set configuration including information on a number of physical downlink control channel (PDCCH) candidates for each control channel element (CCE) aggregation level; and monitoring the PDCCH candidates for a downlink control information (DCI) format on a scheduling cell based on the search space set configuration, The DCI format is a DCI format for scheduling physical downlink shared channels (PDSCHs) or physical uplink shared channels (PUSCHs) on different scheduled cells, and the number of the PDCCH candidates is configured based on a set of all or some of the scheduled cells.
In other aspects of the present disclosure, an apparatus, a processor, and a storage medium for performing the signal monitoring method are provided.
The communication apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

**ADVANTAGEOUS EFFECTS**

According to an embodiment of the present disclosure, when communication devices monitor control signals, the communication devices may perform more efficient signal monitoring based on operations different from those in the prior art.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates a radio frame structure.
FIG. 2 illustrates a resource grid during the duration of a slot.
FIG. 3 illustrates a self-contained slot structure.
FIG. 4 is diagrams for explaining a signal monitoring method according to an embodiment of the present disclosure.
FIGS. 5 to 8 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP technical specification (TS) 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

-    38.211: Physical channels and modulation
-    38.212: Multiplexing and channel coding
-    38.213: Physical layer procedures for control
-    38.214: Physical layer procedures for data
-    38.300: NR and NG-RAN Overall Description
-    38.331: Radio Resource Control (RRC) protocol specification

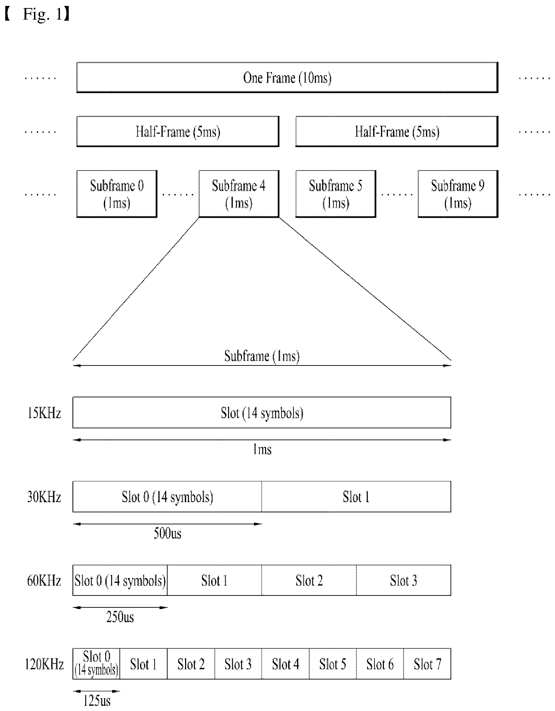

FIG. 1 illustrates a radio frame structure used for NR.
In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).
Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $T^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2^u) | $N^{slot}_{symb}$ | $T^{frame,u}_{slot}$ | $N^{subframe,u}_{slot}$ |
|---|---|---|---|
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60KHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | subcarrier Spacing |
|---|---|---|
| FR1 | 450MHz - 7125MHz | 15, 30, 60kHz |
| FR2 | 24250MHz - 52600MHz | 60, 120, 240kHz |

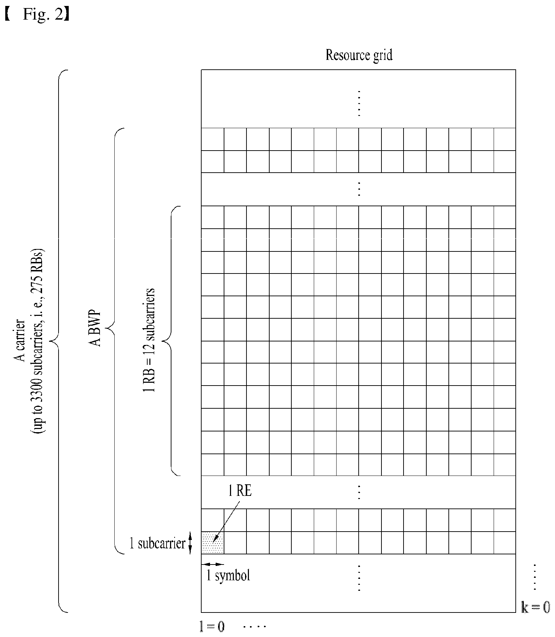

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a user equipment (UE) receives information from a base station (BS) in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

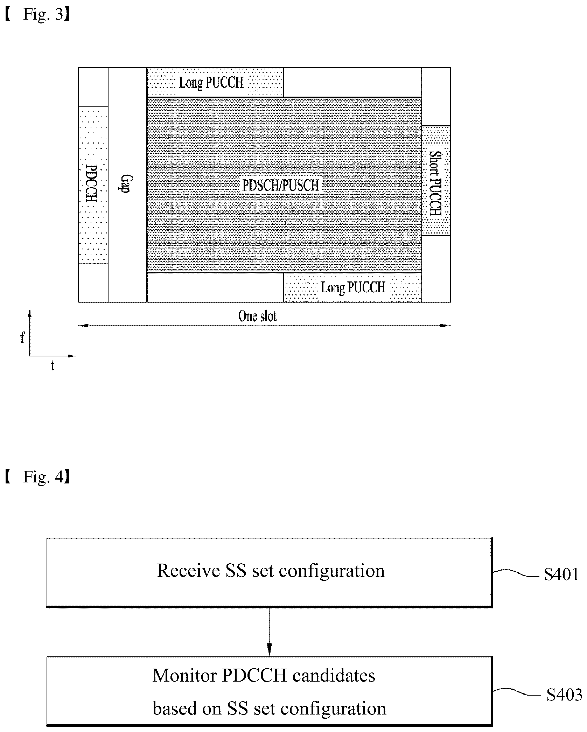

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a BS may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
| --- | --- |
| 0_0 | Schedultug of PUSCH in one cell |
| 0_1 | Scheduling of one of multiple PUSCH in one cell, of indicating downlink feedback information for configured grant PUSCH (CG-DFI) |
| 1_0 | Scheduline of PDSCH in one cell |
| 1_1 | Scheduling of PDSCH in one cell, and or triggering one shot HARQ-ACK codebook feedback |
| 2_0 | Notifying a group of UEs of the slot format, available RB sets, COT duration and search space set group searching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Inrormation | DL-SCH |
| RA-RNTI | Random Access Response | DL-SCH |
| Temporary C-RNTI | Contention Resolution (when no valid C-RNTI is available) | DL-SCH |
| Temporary C-PNTI CERTI, MCS(Modulation | Msg3 transmission | UL-SCH |
| and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configues Scheduling)-RNTI | Configured scheduled unicast transmission (activation, reactivation and retransmission) | DL-SCH. UL-SCH |
| CS-RNTI | Configured scheduled unicast transmission (deactivation) | N A |
| TPC(Transmit Power Control)-PUCCH-RNTI | PUCCH power control | N A |
| TPC-PUSCH-RNTI | PUSCH power control | N/A |
| TPC-SRS-RNTI | SRS trigger and power control | N/A |
| ENT(Interruption)-RNTI | Indication pre-emption an DL | N/A |
| SFI(Slot Format Indication)-RNTI | Slot Format Indication on the given cell | NA |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC=RNTI on a primary cell | Msg2, Msg4 in RACH |
| Type2-PDCCH | Common | P-RNTI on a primary cell | Paging System Information change notification |
| Type3-PDCCH | Common | INT-RNTI, SRI-RNTI, TPC-PUSCH-RNT1, TPC-PUCCH-RNTI, TPC-SRS-RNTI, C-PNTI, MCS-C-RNTI or CS-RNTI | Group signaling |
| UE Specific | UE Specific | C-RNTI, MCS-C-RNTI or CS-RNTI | UE signaling (e.g., PDSCHPUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.

- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system or shared spectrum (licensed bands). Thus, it is obvious that the terms, expressions, and structures in this document may be modified to be suitable for the system in order to implement the technical idea of the present disclosure in the corresponding system.

In Rel-18, to reduce DCI overhead required for PDSCH/PUSCH scheduling, in Rel-18 in a carrier aggregation (CA) scenario where a plurality of cells are configured, a multi-cell scheduling (multi-CC scheduling) method of scheduling multiple serving cells/CCs simultaneously with a single piece of DCI may be considered (based on the justification shown in Table 7). In the present disclosure, the expression 'scheduling of multiple cells' may be understood as 'scheduling of a PDSCH or PUSCH to be transmitted in each of multiple cells." In other words, multi-cell DCI is DCI used to schedule PDSCHs or PUSCHs on different cells.

Table 7 may be understood as a justification for supporting such DCI in Rel-18, serving as one of the motivations for the introduction of the DCI (PDCCH).

[Table 7]

| Excerpted from RP-220834 |
|---|
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |
| One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

Accordingly, the present disclosure proposes a method for monitoring a PDCCH for DCI (multi-cell DCI) for performing the multi-cell scheduling as well as a method for configuring associated PDCCH candidates.

In the proposed methods described below, for convenience of explanation, DCI for performing multi-cell scheduling is denoted as m-cc DCI, and DCI for performing conventional single-cell scheduling is denoted as s-cc DCI. In addition, DCI scheduling a PDSCH and DCI scheduling a PUSCH are collectively referred to as m-cc DCI or s-cc DCI without differentiation. In some cases, the scheduled PDSCH and/or PUSCH may be referred to as a PDSCH/PUSCH (or PxSCH).

In the present disclosure, the term 'cell' may be interpreted according to the context. For example, a cell may refer to a serving cell. In addition, a cell may be composed of one DL component carrier (CC) and one to two UL CCs, but the methods described later are not limited to this configuration. In the following, unless otherwise specified, the terms 'cell' and 'CC' may be used interchangeably. Also, a cell/CC may be substituted and applied as an (active) BWP within a serving cell. Furthermore, unless otherwise specified, the term 'cell/CC' in the methods described later may be used as a concept encompassing a primary cell (PCell), a secondary cell (SCell), primary SCell (PSCell), etc., which may be configured/expressed in CA/DC (dual connectivity) scenarios.

A cell (or CC) that schedules a PDSCH/PUSCH (DL assignment or UL grant) may be referred to as a scheduling cell (or scheduling CC). A cell where the PDSCH/PUSCH scheduled through the scheduling cell is actually transmitted may be referred to as a scheduled cell (or scheduled CC). When the scheduling cell and the scheduled cell are the same, it is called self-carrier scheduling, and when the scheduling cell and the scheduled cell are different, it is referred to as cross-carrier scheduling.

Tables 8 and 9 illustrate information elements (IEs) related to cross-carrier scheduling specified in 3GPP TS 38.331.

**[93]**     [Table 8]

---

−     CrossCarrierSchedulingConfig

The IE CrossCarrierSchedulingConfig is used to specify the configuration when the cross-carrier scheduling is used in a cell.

                    CrossCarrierSchedulingConfig information element

```
-- ASN1START
-- TAG-CROSSCARRIERSCHEDULINGCONFIG-START

CrossCarrierSchedulingConfig ::=      SEQUENCE {
    schedulingCellInfo              CHOICE {
        own                         SEQUENCE {          -- Cross carrier scheduling:
scheduling cell
            cif-Presence            BOOLEAN
        },
        other                       SEQUENCE {          -- Cross carrier scheduling:
scheduled cell
            schedulingCellId            ServCellIndex,
            cif-InSchedulingCell        INTEGER (1..7)
        }
    },
    ...,
    [[
    carrierIndicatorSize-r16        SEQUENCE {
        carrierIndicatorSizeDCI-1-2-r16     INTEGER (0..3),
        carrierIndicatorSizeDCI-0-2-r16     INTEGER (0..3)
    }                                               OPTIONAL,  -- Cond CIF-
PRESENCE
    enableDefaultBeamForCCS-r16     ENUMERATED {enabled}
OPTIONAL  -- Need S
    ]],
    [[
    ccs-BlindDetectionSplit-r17     ENUMERATED {oneSeventh, threeFourteenth,
twoSeventh, threeSeventh,
                        oneHalf, fourSeventh, fiveSeventh, spare1}    OPTIONAL --
Need R
    ]]
}

-- TAG-CROSSCARRIERSCHEDULINGCONFIG-STOP
-- ASN1STOP
```

---

[Table 9]

| CrossCarrierSchedulingConfig field descriptions |
| --- |
| cif-Presence<br>The field is used to indicate whether carrier indicator field is present (value true) or not (value false) in PDCCH DCI formats, see TS 38.213 [13]. If cif-Presence is set to true, the CIF value indicating a grant or assignment for this cell is 0. |
| cif-InSchedulingCell<br>The field indicates the CIF value used in the scheduling cell to indicate a grant or assignment applicable for this cell, see TS 38.213 [13]. |
| other<br>Parameters for cross-carrier scheduling, i.e., a serving cell is scheduled by a PDCCH on another (scheduling) cell. The network configures this field only for SCells. |
| own<br>Parameters for self-scheduling, i.e., a serving cell is scheduled by its own PDCCH. |
| schedulingCellId<br>Indicates which cell signals the downlink allocations and uplink grants, if applicable, for the concerned SCell. In case the UE is configured with DC, the scheduling cell is part of the same cell group (i.e. MCG or SCG) as the scheduled cell. |

In the NR system, a cross-carrier scheduling (CCS) configuration may be configured by a higher layer parameter, CrossCarrierSchedulingConfig as shown in Tables 8 and 9. For DCI that schedules a PDSCH or PUSCH (e.g., DCI format 0_1/0_2/1_1/1_2) a carrier indicator field (CIF) value is configured. This value becomes 0 for its own cell and ranges from 1 to 7 for other cells (configured by cif-InSchedulingCell). Additionally, as shown in Table 10, a configured CIF value corresponds to the value of n_CI and is used for determining PDCCH candidates. In this case, PDCCH monitoring corresponding to a search space set (SS set) configured for a scheduled cell is performed at a PDCCH monitoring occasion (MO) associated with an SS set having the same index as the SS set in a scheduling cell. In addition, the number of PDCCH candidates for each aggregation level (AL) configured in the SS set of the scheduled cell is inherited as it is, and the same number of PDCCH candidates is applied during PDCCH monitoring on the scheduled cell based on the corresponding SS set in the scheduling cell. The PDCCH MO may be determined for each SS set s within a CORESET p. Up to 10 SS sets may be associated with a single CORESET, and each SS set may be identified by the SS set index.

[Table 10]

| For each DL BWP configured to a UE in a serving cell, the UE is provided by higher layers with $S \leq 10$ search space sets where, for each search space set from the $S$ search space sets, the UE is provided the following by *SearchSpace:*<br><br>    - a PDCCH monitoring periodicity of $k_S$ slots and a PDCCH monitoring offset of $o_S$ slots, by *monitoringSlotPeriodicityAndOffset* or by *monitoringSlotPeriodicityAndOffset-r17*<br>    - a PDCCH monitoring pattern within a slot, indicating first symbol(s) of the CORESET for PDCCH monitoring within each slot where the UE monitors PDCCH, by *monitoringSymbolsWithinSlot*<br>    - a duration of $T_S$ < k, indicating a number of slots that the search space set *s* exists by *duration,* or a number of slots in consecutive groups of slots where the search space set s can exist by *duration-r17* |
| --- |

(continued)

A UE determines a PDCCH monitoring occasion on an active DL BWP from the PDCCH monitoring periodicity, the PDCCH monitoring offset, and the PDCCH monitoring pattern within a slot. If *monitoringSlotsWithinSlotGroup* is not provided, the UE determines that PDCCH monitoring occasions exist in a slot with number $n_{s,f}^{\mu}$ [4, TS 38.211] in a frame with number $n_f$ if $\left(n_f\, N_{slot}^{frame,\mu} + n_{s,f}^{\mu} - o_s\right) \bmod k_s = 0$. The UE monitors PDCCH candidates for search space set *s* for $T_s$ consecutive slots, starting from slot $n_{s,f}^{\mu}$, and does not monitor PDCCH candidates for search space set s for the next $k_s$ - $T_s$ consecutive slots. If *monitoringSlotsWithinSlotGroup* is provided, for search space set *s*, the UE determines that the slot with number $n_{s,f}^{\mu}$ [4, TS 38.211] in a frame with number $n_f$ satisfying $\left(n_f\, N_{slot}^{frame,\mu} + n_{s,f}^{\mu} - o_s\right) \bmod k_s = 0$ is the first slot in a first group of $L_s$ slots and that PDCCH monitoring occasions exist in $T_s/L_s$ consecutive groups of slots starting from the first group, where $L_s$ is the size of *monitoringSlotsWithinSlotGroup*. The UE monitors PDCCH candidates for search space set s within each of the $T_s/L_s$ consecutive groups of slots according to *monitoringSlotsWithinSlotGroup,* starting from slot $n_{s,f}^{\mu}$, and does not monitor PDCCH candidates for search space set *s* for the next $k_s$ - $T_s$ consecutive slots.

For a search space set *s* associated with CORESET *p*, the CCE indexes for aggregation level L corresponding to PDCCH candidate $m_{s,n_{CI}}^{(L)}$ of the search space set in slot $n_{s,f}^{\mu}$ for an active DL BWP of a serving cell corresponding to carrier indicator field value $n_{CI}$ are given by

$$L \cdot \left\{ \left( Y_{p,n_{s,f}^{\mu}} + \left\lfloor \frac{m_{s,n_{CI}}^{(L)} \cdot N_{CCE,p}}{L \cdot M_{s,\max}^{(L)}} \right\rfloor + n_{CI} \right) \bmod \left\lfloor N_{CCE,p}/L \right\rfloor \right\} + i$$

where

for any CSS, $Y_{p,n_{s,f}^{\mu}} = 0$ ;

for a USS, $Y_{p,n_{s,f}^{\mu}} = \left( A_p \cdot Y_{p,n_{s,f}^{\mu}-1} \right) \bmod D$, $Y_{p,-1} = n_{RNTI} \neq 0$, $A_p = 39827$ for *pmod*3 = 0, $A_p = 39829$ for *pmod*3 = 1, $A_p = 398\,39$ for *pmod*3 = 2, and D = 65537;

$i = 0, \cdots, L - 1$;

$N_{CCE,p}$ is the number of CCEs, numbered from 0 to $N_{CCE,p}$ - 1, in CORESET *p* and, if any, per RB set;

$n_{CI}$ is the carrier indicator field value if the UE is configured with a carrier indicator field by *CrossCarrierSchedulingConfig* for the serving cell on which PDCCH is monitored, except for scheduling of the serving cell from the same serving cell in which case $n_{CI}$ = 0; otherwise, including for any CSS, $n_{CI}$ = 0;

$m_{s,n_{CI}}^{(L)} = 0, \cdots, M_{s,n_{CI}}^{(L)} - 1$, where $M_{s,n_{CI}}^{(L)}$ is the number of PDCCH candidates the UE is configured to monitor for aggregation level *L* of a search space set s for a serving cell corresponding to $n_{CI}$;

for any CSS, $M_{s,\max}^{(L)} = M_{s,0}^{(L)}$ ;

for a USS, $M_{s,\max}^{(L)}$ is the maximum of $M_{s,n_{CI}}^{(L)}$ over all configured $n_{CI}$ values for a CCE aggregation level *L* of search space set s *;*

the RNTI value used for $n_{RNTI}$ is the C-RNTI.

For example, SS set #s may be configured as follows for cell #1 and cell #2.

- SS set #s configured for cell #1: The number of PDCCH candidates for a specific AL n is set to N_1(n).
- SS set #s configured for cell #2: The number of PDCCH candidates for a specific AL n is set to N_2(n).

In this case, if cross-carrier scheduling is configured such that cell #1 is determined as the scheduling cell for cell #2, the UE may perform monitoring of PDCCHs at the PDCCH MOs configured in SS set #s on cell #1 as follows. Specifically, a PDCCH transmitted on cell #1 may schedule data transmitted on cell #2 (e.g., PDSCH or PUSCH). The relationship established between cell #1 and cell #2 as described above may conveniently be referred to as a CCS relationship. Additionally, monitoring PDCCHs may imply monitoring PDCCH candidates.

- For DCI formats configured in SS set #s of cell #1, N_1(n) PDCCH candidates are monitored for each AL n.
- For DCI formats configured in SS set #s of cell #2, N_2(n) PDCCH candidates are monitored for each AL n.

For the methods described below, the proposed/calculated values in each method (e.g., the number of PDCCH candidates for each scheduled cell, blind detection (BD) counting method, BD budget, or multiplication or division of a specific value to apply weights) may result in integer values as the final results using the ceil or floor functions (unless otherwise specified)

[1] Operation Methods for m-cc DCI and s-cc DCI

In a scenario such as CA, which includes M cells (cell #1 to cell #M, where M is an integer greater than or equal to 1), when a connection relationship (e.g., CCS relationship) is established between a scheduling cell and remaining cells, one of the following options may be configured/applied for m-cc DCI, which is capable of scheduling multiple cells simultaneously, and s-cc DCI, which is capable of scheduling a single cell. For convenience of explanation, a single cell is denoted as cell #k (where k represents a cell index or k-th cell), and a set of two or more cells is denoted using a symbol of { }. For example, {cell #1, cell #2} means cell #1 and cell #2. An arbitrary set of M cells is denoted as {{cell #m}, M}. In this case, cell #m may refer to each cell within the set (m = 1, ..., M).

1.1-1 Option 1: M-cc DCI may always be defined to schedule {{cell #m}, M}. Here, M refers to an integer greater than or equal to 2. In other words, the m-cc DCI always schedules multiple cells simultaneously, and an operation of scheduling only a single cell through m-cc DCI may not be allowed. Cell #m may be a scheduling cell that receives the m-cc DCI (PDCCH) or a scheduled cell that is scheduled by the m-cc DCI.
1.1-1a Option 1a: M-cc DCI may always be defined to schedule {{cell #m}, M}. Here, M refers to an integer greater than or equal to 2. Cell #m may be a scheduled cell that is scheduled by the m-cc DCI.
1.1-2 Option 2: M-cc DCI may be defined to schedule either {{cell #m}, M} or a single cell (ref-cc) among {{cell #m}, M}. In other words, the m-cc DCI may schedule multiple cells simultaneously (multi-cell scheduling) or may schedule only one cell (single-cell scheduling). In this case, the single cell may be fixed to a specific cell (ref-cc). Single-cell scheduling through the m-cc DCI may not be allowed for cells other than the specific cell. Here, M refers to an integer greater than or equal to 2. Cell #m may be a scheduling cell that receives the m-cc DCI (PDCCH) or a scheduled cell that is scheduled by the m-cc DCI. The reference CC (ref-cc) refers to a specific cell among {{cell #m}, M} and may be predefined or configured implicitly or explicitly.

- Method of predefining or implicitly configuring ref-cc: Among {{cell #m}, M}, a cell with the lowest (or highest) index may be selected as ref-cc. Alternatively, if a PCell, PSCell, or PUCCH SCell is included in the set, the corresponding cell may be selected as the ref-cc. A scheduling cell may also be selected as the ref-cc. Further, among cells scheduled by the m-cc DCI, a cell that serves as the reference of CIF values may be determined as the ref-cc.
- Method of explicitly configuring ref-cc: The reference CC (ref-cc) may be configured semi-statically through higher layer signaling such as RRC or a MAC control element (CE) or configured dynamically through DCI. In this case, the signaled cell index may indicate a cell based on the pre-defined rule (or implicit configuration) described above.

1.1-2a Option 2a: M-cc DCI may be defined to schedule either {{cell #m}, M} or a single cell (ref-cc) among {{cell #m}, M}. Here, M refers to an integer greater than or equal to 2. Cell #m may be a scheduled cell that is scheduled by the m-cc DCI. The ref-cc refers to a specific cell among {{cell #m}, M} and may be predefined, implicitly configured, or explicitly configured. The methods described in 1.1-2 Option 2 may be used to configure the ref-cc.
1.1-3 Option 3: M-cc DCI may be defined to schedule {{cell #m}, M}. Here, M refers to an integer greater than or equal to 1. In other words, the m-cc DCI may schedule multiple cells simultaneously or may schedule only one cell. Compared to 1.1-2 Option 2, the one cell does not have to be fixed to a specific cell (ref-cc). Cell #m may be a scheduling cell that receives the m-cc DCI (PDCCH) or a scheduled cell that is scheduled by the m-cc DCI.
1.1-3a Option 3a: M-cc DCI may be defined to schedule {{cell #m}, M}. Here, M refers to an integer greater than or equal to 1. Cell #m may be a scheduled cell that is scheduled by the m-cc DCI.

For each of the above options, the PDCCH monitoring operation of the UE in a cell scheduling the m-cc DCI (PDCCH) may be defined as follows.

1.1-1 Option 1: The UE may expect to receive m-cc DCI configured according to 1.1-1 Option 1. Additionally, the UE may expect to receive s-cc DCI that self-schedules or cross-carrier schedules each cell belonging to { {cell #m}, M}, where m-cc DCI scheduling is configured to be performed.

1.1-1a Option 1a: The UE may expect to receive m-cc DCI configured according to 1.1-1a Option 1a. Additionally, the UE may expect to receive s-cc DCI that cross-carrier schedules one cell among { {cell #m}, M} or self-schedules a scheduling cell.

1.1-2 Option 2: The UE may expect to receive m-cc DCI configured according to 1.1-2 Option 2. Additionally, the UE may expect to receive s-cc DCI that self-schedules or cross-carrier schedules cells, except for a specific ref-cc, among cells belonging to {{cell #m}, M}, where m-cc DCI scheduling is configured to be performed.

1.1-2a Option 2a: The UE may expect to receive m-cc DCI configured according to 1.1-2a Option 2a. Additionally, the UE may expect to receive s-cc DCI that cross-carrier schedules one cell among { {cell #m}, M} or self-schedules a scheduling cell.

1.1-3 Option 3: The UE may expect to receive m-cc DCI configured according to Option 3. In this case, the UE may not expect to receive s-cc DCI that self-schedules or cross-carrier schedules any cell belonging to {{cell #m}, M}, where m-cc DCI scheduling is configured to be performed.

1.1-3a Option 3a: The UE may expect to receive m-cc DCI configured according to 1.1-3a Option 3a. Additionally, the UE may expect to receive s-cc DCI that self-schedules a scheduling cell. In this case, the UE may not expect to receive s-cc DCI that cross-carrier schedules one cell among { { cell #m}, M}.

The proposed methods described below may be characteristically applied to each of the above options.

[2] Method of Configuring Number of PDCCH Candidates for Each AL for Monitoring m-cc DCI

In the NR system, each cell may be configured with the number of PDCCH candidates for each CCE AL of each SS set #s through an SS set configuration. In a scenario such as CA consisting of M cells {{cell #m}, M}, a connection relationship (e.g., CCS relationship) between a scheduling cell and the remaining cells may be established. In this case, an SS set where the connection relationship (e.g., CCS relationship) for the scheduling cell and scheduled cells, which are scheduled via m-cc DCI, may be configured. The number of PDCCH candidates for each AL n, which may be configured through the corresponding SS set, is denoted as PC_m(n). AL n may be 1, 2, 4, 8, 16, but the present disclosure is not limited thereto.

For multiple scheduled CCs that are simultaneously scheduled through m-cc DCI, the reference unit for configuring an SS set and/or the number of PDCCH candidates for each AL n (PC_m(n)) may be based on one of the following three criteria. Hereinafter, proposed operations will be described for cases where m-cc DCI scheduling is configured for M cells, {cell #m}, M}.

**2.1 Criterion 1:** SS set #s for m-cc DCI may be configured, and PC_m(n) may be configured for SS set #s. In this case, the SS set and PC_m(n) may be configured for all possible CC sets (the entire set of CCs) that may be scheduled simultaneously through the m-cc DCI. In other words, the SS set and PC_m(n) may be configured specifically for the m-cc DCI. For example, for m-cc DCI capable of scheduling up to {cell #1, cell #2, cell #3} simultaneously, SS set #s and/or PC_m(n) of the m-cc DCI may be configured without distinguishing between a case where {cell #1, cell #2} are scheduled and a case where {cell #2, cell #3} are scheduled.

**2.2 Criterion 2:** An SS set and/or PC_m(n) may be configured for each CC set capable of being scheduled simultaneously through m-cc DCI. For example, for m-cc DCI capable of scheduling up to {cell #1, cell #2, cell #3} simultaneously, SS set #s_A and/or PC_m(n)_A are configured for a case where the m-cc DCI schedules {cell #1, cell #2}. For a case where the m-cc DCI schedules {cell #2, cell #3}, SS set #s_B and/or PC_m(n)_B are configured. In another example, when one CC is scheduled by the m-cc DCI, for example, when the m-cc DCI schedules {cell #3}, SS set #s_C and/or PC_m(n)_C may be configured. If the m-cc DCI schedules all three CCs, that is, {cell #1, cell #2, cell #3}, SS set #s_D and/or PC_m(n)_D may be configured.

**2.3 Criterion 3:** An SS set and/or PC_m(n) may be configured for each CC capable of being scheduled through m-cc DCI. For example, for m-cc DCI capable of scheduling up to {cell #1, cell #2, cell #3} simultaneously, if {cell #1, cell #2} are scheduled, SS set #s_1 and/or PC_m(n)_1 may be individually configured for cell #1, and SS set #s_2 and/or PC_m(n)_2 may be individually configured for cell #2 (and similarly, SS set #s_3 and/or PC_m(n)_3 may be individually configured for cell #3).

For each of the proposed methods below, the configuration of an SS set for m-cc DCI and/or PC_m(n) of AL n may be independently applied based on one of Criterion 1, Criterion 2, or Criterion 3 described above.

One of the following methods may be applied to configure the number of PDCCH candidates for each AL of m-cc DCI. Herein, when "PC_m(n) of m-cc DCI" is configured, it may mean that PC_m(n) is configured for each criteria based on one of Criterion 1, Criterion 2, or Criterion 3. In this case, SS set #s where a connection relationship (e.g., CCS relationship) is configured for a scheduling cell and scheduled cell(s), which are scheduled through m-cc DCI, may be configured (for each scheduled cell).

2.1 Method 1: SS set #s' corresponding to m-cc DCI (which is different from SS set #s) may be separately configured on a scheduling cell, and PC_m(n) of the m-cc DCI may be configured for each AL through SS set #s'. This may be understood as a method where PC_m(n) of the m-cc DCI is configured via an RRC IE SearchSpace (separately from the number of PDCCH candidates configured on scheduled cells). In other words, the SS set configured for the m-cc DCI may be different from the SS set configured for s-CC DCI, and the number of PDCCH candidates for each AL may be independently configured in each SS set.

2.2 Method 2: PC_m(n) of m-cc DCI may be separately configured for each AL on same SS set #s. This may be understood as a method where PC_m(n) of the m-cc DCI is configured via the RRC IE SearchSpace (separately from the number of PDCCH candidates configured on scheduled cells). In other words, the SS set is shared between the m-cc DCI and s-CC DCI, but the number of PDCCH candidates for each AL for the m-cc DCI may be individually configured.

2.3 Method 3: PC_m(n) of m-cc DCI may be configured on SS set #s based on the number of PDCCH candidates for each AL n of a specific representative cell among scheduled cells capable of being scheduled via the m-cc DCI. For example, PC_m(n) of the m-cc DCI may be set to the same as the number of PDCCH candidates for each AL n of the representative cell or set to a portion of the number. In this case, "a portion" may mean a specific ratio of the PDCCH candidates for each AL n of the representative cell. The specific ratio may be predefined or configured (e.g., through higher layer signaling). The specific ratio may also vary depending on the number of CCs actually scheduled by the m-cc DCI. In this method, the representative cell may be one of cells {{cell #m}, M} where m-cc DCI scheduling is configured to be performed, which may be determined using the ref-cc configuration methods described in [1]. Alternatively, the representative cell may be assumed to be a cell with the minimum or maximum number of PDCCH candidates for each AL n among scheduled CCs, and the minimum or maximum value may be set to PC_m(n) of the m-cc DCI.

2.4 Method 4: PC_m(n) of m-cc DCI may be configured on SS set #s based on the sum of the number of PDCCH candidates for each AL n of scheduled cells, which are scheduled by the m-cc DCI. For example, if four cells (cell #1 to cell #4) are simultaneously scheduled by m-cc DCI and the number of PDCCH candidates for each cell is PC_1(n), PC_2(n), PC_3(n), and PC_4(n), PC_m(n) of the m-cc DCI may be set to the value of PC_1(n) + PC_2(n) + PC_3(n) + PC_4(n) or a portion of the value. In this case, "a portion" may refer to a specific ratio, which may be predefined or configured (e.g., through higher layer signaling). The specific ratio may vary depending on the number of CCs actually scheduled by the m-cc DCI. For example, if four CCs are actually scheduled, PC_m(n) may be determined as PC_m(n) = (PC_1(n)+PC_2(n)+PC_3(n)+PC_4(n)) / 4. If only 2 CCs are actually scheduled, PC_m(n) may be determined as PC_m(n) = (PC_1(n)+PC_2(n)) / 2.

2.5 Method 5: PC_m(n) of m-cc DCI may be configured on SS set #s based on the weighted sum of the number of PDCCH candidates for each AL n of scheduled cells. For example, if three cells (cell #1 to cell #3) are simultaneously scheduled by m-cc DCI and the number of PDCCH candidates for each cell is represented as PC_1(n), PC_2(n), and PC_3(n), PC_m(n) of the m-cc DCI may be set to the value of c1 * PC_1(n) + c2 * PC_2(n) + c3 * PC_3(n) or a portion of the value. Here, c1, c2, and c3 are constants that may be determined equally or differently for each cell. In this case, "a portion" may refer to a specific ratio, which may be predefined or configured (e.g., through higher layer signaling). The specific ratio may also vary depending on the number of CCs actually scheduled via the m-cc DCI. For example, if there are three CCs, PC_m(n) may be determined as PC_m(n) = (c1*PC_1(n) + c2*PC_2(n) + c3*PC_3(n)) / 3, and if there are two CCs, PC_m(n) may be set as PC_m(n) = (c1*PC_1(n) + c2*PC_2(n)) / 2.

Methods 1/2/3/4/5 may each be applied independently or in combination with one another.

Methods 3/4/5 have been described under the assumption of [Method 2] (i.e., assuming that the same SS set is configured by both s-CC DCI and m-cc DCI). However, Methods 3/4/5 may also be applied to cases where separate SS sets are configured for s-CC DCI and m-cc DCI as described in [Method 1].

[3] Method of Calculating Number of PDCCH Candidates per AL n for Each CC for m-cc DCI

In the conventional NR system where only s-CC scheduling is allowed, the number of PDCCH candidates is configured for each cell. Additionally, the maximum number of PDCCH candidates where the UE may perform PDCCH monitoring (blind detection) during a specific time period and/or the maximum number of non-overlapping CCEs may be defined for each cell. Accordingly, the UE may not expect an SS set configuration that exceeds the above number for each scheduled cell where the UE monitors a PDCCH, and (in the case of a PCell) if the number is exceeded, a separate dropping method may be applied. In this case, the specific time period may be defined in terms of slot units, span units, or slot-group units, depending on the PDCCH monitoring capability.

In the case of m-cc DCI, since there may be multiple scheduled cells, the number of PDCCH candidates for each AL n configured for the m-cc DCI may be defined in units of all scheduled CCs (Criterion 1) as described in [2], in units of a set of scheduled CCs (Criterion 2), or in units of scheduled CCs (Criterion 3). If the BD/CCE limit for the m-cc DCI is defined in units of multiple CC, which will be described in [4], overbooking/dropping may be performed according to the defined unit. However, even if [Criterion 1] or [Criterion 2] is applied, the BD/CCE limit may still be checked for each CC. To this end, a method for calculating the number of PDCCH candidates for each scheduled cell needs to be determined.

In a scenario such as CA consisting of M cells {{cell #m}, M}, when a connection relationship (e.g., CCS relationship) between a scheduling cell and remaining cell(s) is established, one of the following methods may be applied to configure the number of PDCCH candidates per AL n for each scheduled cell scheduled via m-cc DCI. In this case, PC_m(n) for AL n of the m-cc DCI may have different meanings depending on Criterion 1/2/3. In the case of [Criterion 1], PC_m(n) refers to the number of PDCCH candidates for each AL n corresponding to all possible CC sets (the entire set of CCs) that may be scheduled simultaneously through m-cc DCI. In the case of [Criterion 2], PC_m(n) refers to the number of PDCCH candidates for each AL n corresponding to each scheduled CC set that may be scheduled via m-cc DCI. In the case of [Criterion 3], PC_m(n) may be the same as the number of PDCCH candidates for each AL n configured for each CC that may be scheduled via m-cc DCI.

3.1 Method 1: The number of PDCCH candidates per AL n for each CC of m-cc DCI may be uniformly set to PC_m(n) of the corresponding CC (preconfigured by s-CC DCI). In this case, regardless of whether Criterion 1, Criterion 2, or Criterion 3 is applied, the number of PDCCH candidates per AL n for each CC may be the PC_m(n) value configured for the corresponding CC.

3.1-1 Method 1-1: The number of PDCCH candidates per AL n for each CC may be uniformly set to PC_m(n). In this case, regardless of whether Criterion 1, Criterion 2, or Criterion 3 is applied, the number of PDCCH candidates per AL n for each CC may have the configured PC_m(n) value.

3.2 Method 2: The number of PDCCH candidates per AL n for each CC of m-cc DCI may be uniformly set to PC_m(n)/M of the corresponding CC (preconfigured by s-CC DCI). For [Criterion 1], M may represent the total number of CCs that may be scheduled via the m-cc DCI. For [Criterion 2], M may represent the number of CCs that are (or will be) actually scheduled simultaneously via the m-cc DCI. For [Criterion 3], M may represent '1'.

3.2-1 Method 2-1: The number of PDCCH candidates per AL n for each CC may be uniformly set to PC_m(n)/M based on a specific value of M. For [Criterion 1], M may represent the total number of CCs that may be scheduled via the m-cc DCI. For [Criterion 2], M may represent the number of CCs that are actually scheduled simultaneously via the m-cc DCI. For [Criterion 3], M may represent '1'.

3.3 Method 3: The number of PDCCH candidates per AL n for each CC of m-cc DCI may be set (differently) for each CC as a specific ratio of PC_m(n) of the corresponding CC (preconfigured by s-cc DCI). In other words, for cell #k, the number of PDCCH candidates per AL n may be set as $\alpha(k) * PC\_m(n)$, and for cell #j, the number of PDCCH candidates per AL n may be set as $\alpha(j) * PC\_m(n)$. For example, if there are three scheduled cells, the number of PDCCH candidates per AL n for cell #1, cell #2, and cell #3 may be set as $\alpha(1) * PC\_m(n)$, $\alpha(2) * PC\_m(n)$, and $\alpha(3) * PC\_m(n)$, respectively. In this case, a relationship of $\alpha(1) + \alpha(2) + \alpha(3) = 1$ may be established. The value of $\alpha$ for each CC may be predefined or configured (e.g., through higher layer signaling) based on the number of CCs. When this method is applied, the number of $\alpha$ values that need to be configured or determined may be considered as follows. For [Criterion 1], the number of $\alpha$ values may be the total number of CCs that may be scheduled via the m-cc DCI. For [Criterion 2], the number of $\alpha$ values may be the number of CCs that are actually (simultaneously) scheduled via the m-cc DCI. For [Criterion 3], the number of $\alpha$ values may be 1.

3.3-1 Method 3-1: The number of PDCCH candidates per AL n for each CC may be set differently for each CC as a specific ratio of PC_m(n). In other words, for cell #k, the number of PDCCH candidates per AL n is set as $\alpha(k) * PC\_m(n)$, and for cell #j, the number of PDCCH candidates per AL n is set as $\alpha(j) * PC\_m(n)$. For example, if there are three scheduled cells, the number of PDCCH candidates per AL n for cell #1, cell #2, and cell #3 may be set as $\alpha(1) * PC\_m(n)$, $\alpha(2) * PC\_m(n)$, and $\alpha(3) * PC\_m(n)$, respectively. In this case, a relationship of $\alpha(1) + \alpha(2) + \alpha(3) = 1$ may be established. The value of $\alpha$ for each CC may be predefined or configured (e.g., through higher layer signaling) based on the number of CCs. When this method is applied, the number of $\alpha$ values that need to be configured or determined may be configured as follows. For [Criterion 1], the number of $\alpha$ values may be the total number of CCs that may be scheduled via the m-cc DCI. For [Criterion 2], the number of $\alpha$ values may be the number of CCs that are actually and simultaneously scheduled via the m-cc DCI. For [Criterion 3], the number of $\alpha$ values may be 1.

3.4 Method 4: The number of PDCCH candidates for a specific representative CC among scheduled CCs scheduled by m-cc DCI may be set to PC_m(n). In this case, the number of PDCCH candidates may not be determined for the remaining scheduled CCs except for the representative CC. Alternatively, as a more generalized method, the number of PDCCH candidates for the remaining CCs excluding the representative CC may be set to be below a predetermined threshold (T) (the number of remaining CCs may vary depending on the criteria method). The number of PDCCH candidates for the representative CC may be set to PC_m(n) - X (if the sum of the values configured for all CCs is X). In this method, the representative CC may be one of cells {{cell #m}, M} where m-cc DCI scheduling is configured to be performed, which may be determined using the ref-cc configuration methods described in [1]. Additionally, the predetermined threshold (T) mentioned above may be determined to avoid SS (set) overbooking and SS (set) dropping, which exceeds a BD budget, in the remaining CCs excluding the representative CC. The value of T may be predefined or configured (e.g., through higher layer signaling).

3.5 Method 5: The number of PDCCH candidates per AL n for each CC may be set (differently) for each CC as a specific ratio of PC_m(n) of the corresponding CC (preconfigured by s-cc DCI). In this case, the weight for each scheduled cell may be determined based on the number (or proportion) of co-scheduled cells (i.e., cells that may be simultaneously scheduled via the m-cc DCI) including the corresponding cell. That is, for cell #k, the number of PDCCH candidates per AL n may be set as $C(k) + \alpha(k) * PC\_m(n)$, and for cell #j, the number of PDCCH candidates per AL n may be set as $C(j) + \alpha(j) * PC\_m(n)$. Alternatively, the number of PDCCH candidates per AL n may be set as $[C(k) + \alpha(k)] * PC\_m(n)$ for cell #k and $[C(j) + \alpha(j)] * PC\_m(n)$ for cell #j. For example, if there are three scheduled cells, the number of PDCCH candidates per AL n for each of cell #1, cell #2, and cell #3 may be set as $[C(1) + \alpha(1)] * PC\_m(n)$, $[C(2) + \alpha(2)] * PC\_m(n)$, and $[C(3) + \alpha(3)] * PC\_m(n)$, respectively. In this case, a relationship of $C(1):C(2):C(3) = 1:2:3$ (or 3:2:1) may be established. Additionally, a weight may be set to satisfy $C(1):C(2):C(3) = 1:2:3$ and $\alpha(1) + \alpha(2) + \alpha(3) = 1$ and/or $C(1) + C(2) + C(3) = 1$ simultaneously. Alternatively, the weight for each cell (i.e., the value of C(k) for cell #k) may be determined based on the number of cells in a set of co-scheduled cells including the corresponding cell. For example, if the co-scheduled cell set for cell #k is {cell #1, cell #2}, the weight for cell #1 may be C(1), or the weight for cell #1 may be determined as a value obtained by dividing C(1) by the number of cells in the co-scheduled cell set that includes cell #1 (in this case, the weight for cell #1 would be $0.5 * C(1)$). Additionally, the weight value for each CC (i.e., the value of C(k) for cell #k) may be predefined based on the number of CCs (or the number of co-scheduled cell sets) or may be configured via RRC (e.g., higher layer signaling). When this method is applied, the number of weight values per cell that need to be configured or determined may be considered as follows. For [Criterion 1], the number of weight values per cell may be the total number of cells that may be scheduled via the m-cc DCI. For [Criterion 2], the number of weight values per cell may be the number of cells that are actually (simultaneously) scheduled via the m-cc DCI. For [Criterion 3], the number of weight values per cell may be 1.

3.6 Method 6: The number of PDCCH candidates per AL n for each CC may be set (differently) for each CC as a specific ratio of PC_m(n) of the corresponding CC (preconfigured by s-cc DCI). In this case, the weight for each scheduled cell may be determined based on the number (or proportion) of co-scheduled cell sets (that may be simultaneously scheduled via the m-cc DCI) including the corresponding cell. That is, for cell #k, the number of PDCCH candidates per AL n may be set as $C(k) * PC\_m(n)$, and for cell #j, the number of PDCCH candidates per AL n may be set as $C(j) * PC\_m(n)$. Here, C(k) and C(j) represent the number (or proportion) of co-scheduled cell sets that include cell #k and cell #j, respectively. For example, if there are three scheduled cells that may be simultaneously scheduled via the m-cc DCI, and if it is configured by an RRC configuration that one of the co-scheduled cell sets: {cell #1}, {cell #1, cell #2}, or {cell #1, cell #2, cell #3} is capable of being scheduled by the m-cc DCI, the number of PDCCH candidates for each AL n may be configured as $C(1) * PC\_m(n)$ for cell #1, $C(2) * PC\_m(n)$ for cell #2, and $C(3) * PC\_m(n)$ for cell #3. In this case, a relationship of $C(1):C(2):C(3) = 1:2:3$ (or 3:2:1) may be established. Additionally, a weight may be set to satisfy $C(1):C(2):C(3) = 1:2:3$ and $\alpha(1) + \alpha(2) + \alpha(3) = 1$ and/or $C(1) + C(2) + C(3) = 1$ simultaneously. As a simple example, C(1), C(2), and C(3) may be set as $C(1) = 1/6$, $C(2) = 2/6$, and $C(3) = 3/6$. The weight value for each CC (i.e., the value of C(k) for cell #k) may be predefined based on the number of CCs (or the number of co-scheduled cell sets) or may be configured via RRC (e.g., higher layer signaling). When this method is applied, the number of weight constants C(k) that need to be configured or determined may be considered as follows. For [Criterion 1], the number of weight constants C(k) may be the total number of cells that may be scheduled via the m-cc DCI. For [Criterion 2], the number of weight constants C(k) may be the number of cells that are actually (simultaneously) scheduled via the m-cc DCI. For [Criterion 3], the number of weight constants C(k) may be 1.

3.7 Method 7: The number of PDCCH candidates per AL n for each CC of m-cc DCI may be set (differently) for each CC as a specific ratio of PC_m(n) of the corresponding CC (preconfigured by s-cc DCI). In this case, the specific ratio may be a weight applied to PC_m(n). For example, a value obtained by multiplying the weight by PC_m(n) may be set to the number of PDCCH candidates per AL n for each CC of the m-cc DCI. For example, if a set of cells scheduled simultaneously via a single piece of m-cc DCI is defined as a "co-scheduled cell set," the specific ratio or weight may be determined based on the ratio (e.g., B/A) between the total number of co-scheduled cell sets (e.g., A) and the number of co-scheduled cell sets including the corresponding CC (e.g., B). Alternatively, for each co-scheduled cell set, if the CC belongs to the corresponding cell set, the weight may be determined as 1. Otherwise, the weight may be determined as 0. In another example, if the number of cells in a co-scheduled cell set is defined as C, the specific ratio or weight may be determined by calculating 1/C for each co-scheduled cell set including the corresponding CC and then summing the values of 1/C. Alternatively, for each co-scheduled cell set, if the CC belongs to the corresponding cell set, the weight may be determined as 1/C (based on the value of C of the corresponding cell set), and if not, the weight may be determined as 0.

The methods described above may be applied independently, or the principles of each method may be combined and applied together.

Additionally, when the previously described methods are be applied, if some of multiple CCs scheduled simultaneously via m-cc DCI are unavailable (not applicable), PC_m(n) may be distributed across only the available CCs excluding the unavailable CCs. In this case, an unavailable CC refers to a CC on which a PDSCH/PUSCH is scheduled or indicated via the m-cc DCI but is not actually transmitted. The reasons that the PDSCH/PUSCH is not actually transmitted include a case where the scheduled PDSCH/PUSCH does not comply with a (semi-static) DL/UL configuration configured for the cell (e.g., due to an overlap in time with semi-static DL/UL symbols) and/or a case where the scheduled PDSCH/PUSCH overlaps with other signals/channels such as an SSB and thus is not actually transmitted.

The proposed method for calculating the number of PDCCH candidates for each CC may be understood as a method for counting BD attempts required for monitoring m-cc DCI (i.e., a method for determining how to count BD attempts for m-CC DCI in relation to DCI associated with a specific CC). For example, "3.4 Method 4: Setting the number of PDCCH candidates for a specific representative CC among scheduled CCs to PC_m(n)" may be interpreted as a method of counting BD attempts (up to PC_m(n) BD attempts) for monitoring m-cc DCI (and a related PDCCH) as BD attempts for DCI related to a specific representative CC.

[4] Method of Configuring BD/CCE Limit and Determining Overbooking for m-cc DCI

In the NR system, the UE defines a BD/CCE limit for each scheduled cell in advance for a specific time period (slot/span/slot-group). The UE then checks whether the number of PDCCH candidates for each CC within the period exceeds a BD limit or whether the number of CCEs associated with the PDCCH candidates exceeds a CCE limit. In other words, when PDCCH monitoring occasions (MOs) that the UE is capable of monitoring (for each time period) are allocated, the BD/CCE limit should not be exceeded. Specifically, SS sets are configured such that a predefined BD/CCE limit is not exceeded for all SS sets (CSS and USS) of an SCell and the CSS of a PCell. For the USS of the PCell, SS sets may be configured to exceed the BD/CCE limit (overbooking); however, in such cases, a dropping rule is applied. In other words, only the SS sets that do not exceed the BD/CCE limits among the configured SS sets may be configured/monitored.

The following reference relates to the BD/CCE limit and overbooking/dropping method for each cell specified in NR, which is described in '10.1 UE procedure for determining physical downlink control channel assignment' of 3GPP TS 38.213. The operations outlined in the reference may be included as a part of the configuration of the present disclosure.

[Reference]

Table 10.1-2 provides the maximum number of monitored PDCCH candidates, $M_{PDCCH}^{max,slot,\mu}$, per slot for a UE in a DL BWP with SCS configuration $\mu$ for operation with a single serving cell.

Table 10.1-2:

| Maximum number $M_{PDCCH}^{max,slot,\mu}$ of monitored PDCCH candidates per slot for a DL BWP with SCS configuration $\mu \in \{0, 1,2,3\}$ for a single serving cell | |
|---|---|
| $\mu$ | Maximum number of monitored PDCCH candidates per slot and per serving cell $M_{PDCCH}^{max,slot,\mu}$ |
| 0 | 44 |
| 1 | 36 |
| 2 | 22 |
| 3 | 20 |

Table 10.1-2A provides the maximum number of monitored PDCCH candidates, $M_{PDCCH}^{max,(X,Y),\mu}$, per span for a UE in a DL BWP with SCS configuration $\mu$ for operation with a single serving cell.

Table 10.1-2A:

| Maximum number $M_{\text{PDCCH}}^{\max,(X,Y),\mu}$ of monitored PDCCH candidates in a span for combination (X, Y) for a DL BWP with SCS configuration $\mu \in \{0, 1\}$ for a single serving cell | | |
|---|---|---|
| Maximum number $M_{\text{PDCCH}}^{\max,(X,Y),\mu}$ of monitored PDCCH candidates per span for combination (X, Y) and per serving cell | | |
| μ | (2, 2) | (4, 3) | (7, 3) |
| 0 | 14 | 28 | 44 |
| 1 | 12 | 24 | 36 |

Table 10.1-2B provides the maximum number of monitored PDCCH candidates, $M_{\text{PDCCH}}^{\max,X_s,\mu}$, per group of $X_s$ slots for combination $(X_s, Y_s)$ for a UE in a DL BWP with SCS configuration $\mu$ for operation with a single serving cell.

Table 10.1-2B:

| Maximum number $M_{\text{PDCCH}}^{\max,X_s,\mu}$ of monitored PDCCH candidates per group of $X_s$ slots for combination $(X_s, Y_s)$ for a DL BWP with SCS configuration $\mu \in \{5, 6\}$ for a single serving cell | | | |
|---|---|---|---|
| Maximum number $M_{\text{PDCCH}}^{\max,X_s,\mu}$ of monitored PDCCH candidates in a group of $X_s$ slots per combination $(X_s, Y_s)$ and per serving cell | | | |
| | (4, 1) | (4, 2) | (8, 1) | (8, 4) |
| 5 | 20 | 20 | - | - |
| 6 | 10 | 10 | 20 | 20 |

Table 10.1-3 provides the maximum number of non-overlapped CCEs, $C_{\text{PDCCH}}^{\max,slot,}$, for a DL BWP with SCS configuration $\mu$ that a UE is expected to monitor corresponding PDCCH candidates per slot for operation with a single serving cell.

CCEs for PDCCH candidates are non-overlapped if they correspond to

- different CORESET indexes, or
- different first symbols for the reception of the respective PDCCH candidates.

Table 10.1-3:

| Maximum number $C_{\text{PDCCH}}^{max,slot,\mu}$ of non-overlapped CCEs per slot for a DL BWP with SCS configuration $\mu \in \{0, 1, 2, 3\}$ for a single serving cell | |
|---|---|
| μ | Maximum number of non-overlapped CCEs per slot and per serving cell $C_{\text{PDCCH}}^{max,slot,\mu}$ |
| 0 | 56 |
| 1 | 56 |
| 2 | 48 |
| 3 | 32 |

Table 10.1-3A provides the maximum number of non-overlapped CCEs, $C_{PDCCH}^{max,(X,Y),\mu}$, for a DL BWP with SCS configuration $\mu$ that a UE is expected to monitor corresponding PDCCH candidates per span for operation with a single serving cell.

Table 10.1-3A:

| Maximum number $C_{PDCCH}^{max,(X,Y),\mu}$ of non-overlapped CCEs in a span for combination (X, Y) for a DL BWP with SCS configuration $\mu \in \{0, 1\}$ for a single serving cell | | | |
|---|---|---|---|
| | Maximum number $C_{PDCCH}^{max,(X,Y),\mu}$ of non-overlapped CCEs per span for combination (X, Y) and per serving cell | | |
| $\mu$ | (2, 2) | (4, 3) | (7, 3) |
| | | | |
| 0 | 18 | 36 | 56 |
| 1 | 18 | 36 | 56 |

Table 10.1-3B provides the maximum number of non-overlapped CCEs, $C_{PDCCH}^{max,X_s,\mu}$, for a DL BWP with SCS configuration $\mu$ that a UE is expected to monitor corresponding PDCCH candidates per group of $X_s$ slots for combination $(X_s, Y_s)$ for operation with a single serving cell.

Table 10.1-3B:

| Maximum number $C_{PDCCH}^{max,X_s,\mu}$ of non-overlapped CCEs in a group of $X_s$ slots for any combination $(X_s, Y_s)$ for a DL BWP with SCS configuration $\mu \in \{5, 6\}$ for a single serving cell | | | |
|---|---|---|---|
| Maximum number of non-overlapped CCEs in a group of $X_s$ slots per combination $(X_s, Y_s)$ and per serving cell $C_{PDCCH}^{max,X_s,\mu}$ | | | |
| $\mu$ | (4, 1) | (4, 2) | (8, 1) | (8, 4) |
| 5 | 32 | 32 | - | - |
| 6 | 16 | 16 | 32 | 32 |

If a UE

- does not report pdcch-BlindDetectionCA, pdcch-BlindDetectionCA1, pdcch-BlindDetectionCA2, or pdcch-BlindDetectionCA3, or is not provided BDFactorR, $\gamma = R$
- reports pdcch-BlindDetectionCA, pdcch-BlindDetectionCA1, pdcch-BlindDetectionCA2, or pdcch-BlindDetectionCA3, the UE can be indicated by BDFactorR either $\gamma = 1$ or $\gamma = R$

If a UE is configured with $N_{cells,0}^{DL,\mu} + N_{cells,1}^{DL,\mu}$ downlink cells for which the UE is not provided monitoringCapabilityConfig, or is provided monitoringCapabilityConfig = r15monitoringcapability and is not provided CORESETPoolIndex, with associated PDCCH candidates monitored in the active DL BWPs of the scheduling cells using SCS configuration $\mu$ where $\sum_{\mu=0}^{3}\left(N_{cells,0}^{DL,\mu} + \gamma \cdot N_{cells,1}^{DL,\mu}\right) \leq N_{cells}^{cap}$, the UE is not required to monitor, on the active DL BWPs of the scheduling cells,

- more than $M_{PDCCH}^{total,slot,\mu} = M_{PDCCH}^{max,slot,\mu}$ PDCCH candidates or more than $C_{PDCCH}^{total,slot,\mu} = C_{PDCCH}^{max,slot,\mu}$ non-

overlapped CCEs er slot for each scheduled cell when the scheduling cell is from the $N_{cells,0}^{DL,\mu}$ downlink cells, or

- more than $M_{PDCCH}^{total,slot,\mu} = \gamma \cdot M_{PDCCH}^{max,slot,\mu}$ PDCCH candidates or more than $C_{PDCCH}^{total,slot,\mu} = \gamma \cdot C_{PDCCH}^{max,slot,\mu}$

non-overlapped CCEs per slot for each scheduled cell when the scheduling cell is from the $N_{cells,1}^{DL,\mu}$ downlink cells

- more than $M_{PDCCH}^{max,slot,\mu}$ PDCCH candidates or more than $C_{PDCCH}^{max,slot,\mu}$ non-overlapped CCEs per slot for CORESETs with same coresetPoolIndex value for each scheduled cell when the scheduling cell is from the $N_{cells,1}^{DL,\mu}$ downlink cells $N_{cells}^{cap}$ is replaced by $N_{cells,r15}^{cap-r16}$, if a UE is configured with downlink cells for which the UE is provided both monitoringCapabilityConfig = r15monitoringcapability and monitoringCapabilityConfig = r16monitoringcapability.

If a UE

- is configured with $N_{cells,0}^{DL,\mu} + N_{cells,1}^{DL,\mu}$ downlink cells for which the UE is not provided monitoringCapabilityConfig, or is provided monitoringCapabilityConfig = r15monitoringcapability and is not provided coresetPoolIndex,
- with associated PDCCH candidates monitored in the active DL BWPs of the scheduling cell(s) using SCS config-uration $\mu$, where $\sum_{\mu=0}^{3}(N_{cells,0}^{DL,\mu} + \gamma \cdot N_{cells,1}^{DL,\mu}) > N_{cells}^{cap}$, and
- a DL BWP of an activated cell is the active DL BWP of the activated cell, and a DL BWP of a deactivated cell is the DL BWP with index provided by firstActiveDownlinkBWP-Id for the deactivated cell,

the UE is not required to monitor more than

$$M_{PDCCH}^{total,slot,\mu} = \left\lfloor N_{cells}^{cap} \cdot M_{PDCCH}^{max,slot,\mu} \cdot \left(N_{cells,0}^{DL,\mu} + \gamma \cdot N_{cells,1}^{DL,\mu}\right)/\sum_{j=0}^{3}\left(N_{cells,0}^{DL,j} + \gamma \cdot N_{cells,1}^{DL,j}\right)\right\rfloor$$ PDDCCH candi-

dates or more than $C_{PDCCH}^{total,slot,\mu} = \left\lfloor N_{cells}^{cap} \cdot C_{PDCCH}^{max,slot,\mu} \cdot \left(N_{cells,0}^{DL,\mu} + \gamma \cdot N_{cells,1}^{DL,\mu}\right)/\sum_{j=0}^{3}\left(N_{cells,0}^{DL,j} + \gamma \cdot N_{cells,1}^{DL,j}\right)\right\rfloor$

non-overlapped CCEs per slot on the active DL BWP(s) of scheduling cell(s) from the $N_{cells,0}^{DL,\mu} + N_{cells,1}^{DL,\mu}$ downlink cells. $N_{cells}^{cap}$ is replaced by $N_{cells,r15}^{cap-r16}$ if a UE is configured with downlink cells for which the UE is provided both monitoringCapabilityConfig = r15monitoringcapability and monitoringCapabilityConfig = r16monitoringcapability.

For each scheduled cell from the $N_{cells,0}^{DL,\mu}$ downlink cells, the UE is not required to monitor on the active DL BWP with SCS configuration $\mu$ of the scheduling cell more than $\min\left(M_{PDCCH}^{max,slot,\mu}, M_{PDCCH}^{total,slot,\mu}\right)$ PDCCH candidates or more than $\min\left(C_{PDCCH}^{max,slot,\mu}, C_{PDCCH}^{total,slot,\mu}\right)$ non-overlapped CCEs per slot.

For each scheduled cell from the $N_{cells,1}^{DL,\mu}$ downlink cells, the UE is not required to monitor on the active DL BWP with SCS configuration $\mu$ of the scheduling cell

- more than $\min\left(\gamma \cdot M_{PDCCH}^{max,slot,\mu}, M_{PDCCH}^{total,slot,\mu}\right)$ PDCCH candidates or more than $\min(\gamma \cdot C_{PDCCH}^{max,slot,\mu}, C_{PDCCH}^{total,slot,\mu})$ non-overlapped CCEs per slot

- more than $\min\left(M_{\text{PDCCH}}^{\text{max,slot,}\mu}, M_{\text{PDCCH}}^{\text{total,slot,}\mu}\right)$ PDCCH candidates or more than $\min\left(C_{\text{PDCCH}}^{\text{max,slot,}\mu}, C_{\text{PDCCH}}^{\text{total,slot,}\mu}\right)$ non-overlapped CCEs per slot for CORESETs with same coresetPoolIndex value

If a UE is configured with $N_{\text{cells,r16}}^{\text{DL,}\mu}$ downlink cells for which the UE is provided monitoringCapabilityConfig = r16monitoringcapability and with associated PDCCH candidates monitored in the active DL BWPs of the scheduling cells using SCS configuration $\mu$, and with $N_{\text{cells,r16}}^{\text{DL,(X,Y),}\mu}$ of the $N_{\text{cells,r16}}^{\text{DL,}\mu}$ downlink cells using combination (X, Y) for PDCCH monitoring, where $\sum_{\mu=0}^{1} N_{\text{cells,r16}}^{\text{DL,}\mu} \leq N_{\text{cells}}^{\text{cap-r16}}$ , the UE is not required to monitor, on the active DL BWP of the scheduling cell, more than $M_{\text{PDCCH}}^{\text{total,(X,Y),}\mu} = M_{\text{PDCCH}}^{\text{max,(X,Y),}\mu}$ PDCCH candidates or more than $C_{\text{PDCCH}}^{\text{total,(X,Y),}\mu} = C_{\text{PDCCH}}^{\text{max,(X,Y),}\mu}$ non-overlapped CCEs per span for each scheduled cell when the scheduling cell is from the $N_{\text{cells,r16}}^{\text{DL,(X,Y),}\mu}$ downlink cells. If a UE is configured with downlink cells for which the UE is provided both monitoringCapabilityConfig = r15monitoringcapability and monitoringCapabilityConfig = r16monitoringcapability, $N_{\text{cells}}^{\text{cap-r16}}$ is replaced by $N_{\text{cells,r16}}^{\text{cap-r16}}$ .

If a UE is configured only with $N_{\text{cells,r16}}^{\text{DL,}\mu}$ downlink cells for which the UE is provided monitoringCapabilityConfig = r16monitoringcapability and with associated PDCCH candidates monitored in the active DL BWPs of the scheduling cells using SCS configuration $\mu$, and with $N_{\text{cells,r16}}^{\text{DL,(X,Y),}\mu}$ of the $N_{\text{cells,r16}}^{\text{DL,}\mu}$ downlink cells using combination (X, Y) for PDCCH monitoring, where $\sum_{\mu=0}^{1} N_{\text{cells,r16}}^{\text{DL,}\mu} > N_{\text{cells}}^{\text{cap-r16}}$ , a DL BWP of an activated cell is the active DL BWP of the activated cell, and a DL BWP of a deactivated cell is the DL BWP with index provided by firstActiveDownlinkBWP-Id for the deactivated cell, the UE is not required to monitor more than

$$M_{\text{PDCCH}}^{\text{total,(X,Y),}\mu} = \left\lfloor N_{\text{cells}}^{\text{cap-r16}} \cdot M_{\text{PDCCH}}^{\text{max,(X,Y),}\mu} \cdot N_{\text{cells,r16}}^{\text{DL,(X,Y),}\mu} / \sum_{j=0}^{1} N_{\text{cells,r16}}^{\text{DL,j}} \right\rfloor$$ PDCCH candidates or more than

$$C_{\text{PDCCH}}^{\text{total,(X,Y),}\mu} = \left\lfloor N_{\text{cells}}^{\text{cap-r16}} \cdot C_{\text{PDCCH}}^{\text{max,(X,Y),}\mu} \cdot N_{\text{cells,r16}}^{\text{DL,(X,Y),}\mu} / \sum_{j=0}^{1} N_{\text{cells,r16}}^{\text{DL,j}} \right\rfloor$$ non-overlapped CCEs

- per set of spans on the active DL BWP(s) of all scheduling cell(s) from the $N_{\text{cells,r16}}^{\text{DL,(X,Y),}\mu}$ downlink cells within every X symbols, if the union of PDCCH monitoring occasions on all scheduling cells from the $N_{\text{cells,r16}}^{\text{DL,(X,Y),}\mu}$ downlink cells results to PDCCH monitoring according to the combination (X, Y) and any pair of spans in the set is within Y symbols, where first X symbols start at a first symbol with a PDCCH monitoring occasion and next X symbols start at a first symbol with a PDCCH monitoring occasion that is not included in the first X symbols

- per set of spans across the active DL BWP(s) of all scheduling cells from the $N_{\text{cells,r16}}^{\text{DL,(X,Y),}\mu}$ downlink cells, with at most one span per scheduling cell for each set of spans, otherwise

where $N_{\text{cells,r16}}^{\text{DL,j}}$ is a number of configured cells with associated PDCCH candidates monitored in the active DL BWPs of the scheduling cells using SCS configuration j. If a UE is configured with downlink cells for which the UE is provided both monitoringCapabilityConfig = r15monitoringcapability and monitoringCapabilityConfig = r16monitoringcapability, $N_{\text{cells}}^{\text{cap-r16}}$ is replaced by $N_{\text{cells,r16}}^{\text{cap-r16}}$ .

For each scheduled cell from the $N_{\text{cells,r16}}^{\text{DL},(X,Y),\mu}$ downlink cells using combination (X, Y), the UE is not required to monitor on the active DL BWP with SCS configuration $\mu$ of the scheduling cell, more than $\min\left(M_{\text{PDCCH}}^{\max,(X,Y),\mu}, M_{\text{PDCCH}}^{\text{total},(X,Y),\mu}\right)$ PDCCH candidates or more than $\min\left(C_{\text{PDCCH}}^{\max,(X,Y),\mu}, C_{\text{PDCCH}}^{\text{total},(X,Y),\mu}\right)$ non-overlapped CCEs per span.

A UE does not expect to be configured CSS sets, except for CSS sets provided by searchSpaceMCCH, searchSpaceMTCH or by SearchSpace in PDCCH-ConfigMulticast for DCI formats with CRC scrambled by G-RNTI or G-CS-RNTI, that result to corresponding total, or per scheduled cell, numbers of monitored PDCCH candidates and non-overlapped CCEs per slot, per group of $X_s$ slots for a corresponding combination $(X_s, Y_s)$, or per span that exceed the corresponding maximum numbers per slot, or per group of $X_s$ slots for a corresponding combination $(X_s, Y_s)$, or per span, respectively.

For same cell scheduling or for cross-carrier scheduling, a UE does not expect a number of PDCCH candidates, and a number of corresponding non-overlapped CCEs per slot, or per group of $X_s$ slots for a corresponding combination $(X_s, Y_s)$, or per span, on a secondary cell to be larger than the corresponding numbers that the UE is capable of monitoring on the secondary cell per slot, or per group of $X_s$ slots for a corresponding combination $(X_s, Y_s)$, or per span, respectively. If a UE is provided monitoringCapabilityConfig = r16monitoringcapability for the primary cell, except the first span of each slot, the UE does not expect a number of PDCCH candidates and a number of corresponding non-overlapped CCEs per span on the primary cell to be larger than the corresponding numbers that the UE is capable of monitoring on the primary cell per span.

If a UE is configured with $N_{\text{cells,r17}}^{\text{DL},\mu}$ downlink cells with SCS configuration $\mu \in \{5, 6\}$ in the active DL BWPs of the scheduling cells, and with $N_{\text{cells,r17}}^{\text{DL},X_s,\mu}$ of the $N_{\text{cells,r17}}^{\text{DL},\mu}$ downlink cells using any combination $(X_s, Y_s)$ for a group of $X_s$ slots for PDCCH monitoring, where $\sum_{\mu=5}^{6} N_{\text{cells,r17}}^{\text{DL},\mu} \leq N_{\text{cells}}^{\text{cap-r17}}$, the UE is not required to monitor, on the active DL BWP of the scheduling cell, more than $M_{\text{PDCCH}}^{\text{total},X_s,\mu} = M_{\text{PDCCH}}^{\max,X_s,\mu}$ PDCCH candidates or more than $C_{\text{PDCCH}}^{\text{total},X_s,\mu} = C_{\text{PDCCH}}^{\max,X_s,\mu}$ non-overlapped CCEs per group of $X_s$ slots for each scheduled cell when the scheduling cell is from the $N_{\text{cells,r17}}^{\text{DL},X_s,\mu}$ downlink cells. If the UE is configured with downlink cells for which the UE is provided monitoringCapabilityConfig = r15monitoringcapability and downlink cells for which the UE is provided monitoringCapabilityConfig = r17monitoringcapability for the active DL BWPs, $N_{\text{cells}}^{\text{cap-r17}}$ is replaced by $N_{\text{cells,r17/r15}}^{\text{cap-r17}}$. If the UE is configured with downlink cells for which the UE is provided monitoringCapabilityConfig = r16monitoringcapability and downlink cells for which the UE is provided monitoringCapabilityConfig = r17monitoringcapability for the active DL BWPs, $N_{\text{cells}}^{\text{cap-r17}}$ is replaced by $N_{\text{cells,r17/r16}}^{\text{cap-r17}}$. If the UE is configured with downlink cells for which the UE is provided monitoringCapabilityConfig = r15monitoringcapability and monitoringCapabilityConfig = r16monitoringcapability and downlink cells with SCS configuration $\mu \in \{5, 6\}$ for the active DL BWPs, $N_{\text{cells}}^{\text{cap-r17}}$ is replaced by $N_{\text{cells,r17/\{r15,r16\}}}^{\text{cap-r17}}$.

If a UE is configured $N_{\text{cells,r17}}^{\text{DL},\mu}$ downlink cells with monitoringCapabilityConfig = r17monitoringcapability for the active DL BWPs of the scheduling cells, and with $N_{\text{cells,r17}}^{\text{DL},X_s,\mu}$ of the $N_{\text{cells,r17}}^{\text{DL},\mu}$ downlink cells using any combination $(X_s, Y_s)$ for a group of $X_s$ slots for PDCCH monitoring, where $\sum_{\mu=5}^{6} N_{\text{cells,r17}}^{\text{DL},\mu} > N_{\text{cells}}^{\text{cap-r17}}$, a DL BWP of an activated cell is the active DL BWP of the activated cell, and a DL BWP of a deactivated cell is the DL BWP with index provided by firstActiveDownlinkBWP-Id for the deactivated cell, the UE is not required to monitor more than

$$M_{\text{PDCCH}}^{\text{total},X_s,\mu} = \left\lfloor N_{\text{cells}}^{\text{cap-r17}} \cdot M_{\text{PDCCH}}^{\max,X_s,\mu} \cdot N_{\text{cells,r17}}^{\text{DL},X_s,\mu} / \sum_{j=5}^{6} N_{\text{cells,r17}}^{\text{DL},j} \right\rfloor$$ PDCCH candidates, or more than

$$C_{\text{PDCCH}}^{\text{total},X_s,\mu} = \left\lfloor N_{\text{cells}}^{\text{cap-r17}} \cdot C_{\text{PDCCH}}^{\max,X_s,\mu} \cdot \right.$$

$$\left. N_{\text{cells,r17}}^{\text{DL},X_s,\mu} / \sum_{j=5}^{6} N_{\text{cells,r17}}^{\text{DL},j} \right\rfloor$$

non-overlapped CCEs, per group of $X_s$ slots on the active DL BWP(s) of scheduling cell(s)

from the $N_{\text{cells,r17}}^{\text{DL},X_s,\mu}$ downlink cells where $N_{\text{cells,r17}}^{\text{DL},j}$ is a number of configured cells with associated PDCCH candidates monitored in the active DL BWPs of the scheduling cells using SCS configuration j. If the UE is configured $N_{\text{cells,r17}}^{\text{DL},\mu}$ downlink cells for which the UE is provided both monitoringCapabilityConfig = r15monitoringcapability or monitoringCapabilityConfig = r16monitoringcapability, and monitoringCapabilityConfig = r17monitoringcapability for the active DL BWP, $N_{\text{cells}}^{\text{cap-r17}}$ is replaced by $N_{\text{cells,r17/r15}}^{\text{cap-r17}}$, or by $N_{\text{cells,r17/r16}}^{\text{cap-r17}}$, or by $N_{\text{cells,r17/\{r15,r16\}}}^{\text{cap-r17}}$, respectively, and

$$M_{\text{PDCCH}}^{\text{total},X_s,\mu} = \left\lfloor N_{\text{cells, ref}}^{\text{cap-r17}} \cdot M_{\text{PDCCH}}^{\max,X_s,\mu} \cdot \right.$$

$$\left. N_{\text{cells,r17}}^{\text{DL},X_s,\mu} / \sum_{j=0}^{6} N_{\text{cells,r17}}^{\text{DL},j} \right\rfloor, \quad C_{\text{PDCCH}}^{\text{total},X_s,\mu} = \left\lfloor N_{\text{cells,ref}}^{\text{cap-r17}} \cdot C_{\text{PDCCH}}^{\max,X_s,\mu} \cdot N_{\text{cells,r17}}^{\text{DL},X_s,\mu} / \sum_{j=0}^{6} N_{\text{cells,r17}}^{\text{DL},j} \right\rfloor, \text{ and}$$

$N_{\text{cells,ref}}^{\text{cap-r17}}$ is one of $N_{\text{cells,r17/r15}}^{\text{cap-r17}}$, $N_{\text{cells,r17/r16}}^{\text{cap-r17}}$, or $N_{\text{cells,r17/\{r15,r16\}}}^{\text{cap-r17}}$, respectively.

For each scheduled cell from the $N_{\text{cells,r17}}^{\text{DL},X_s,\mu}$ downlink cells using any combination $(X_s, Y_s)$ for a group of $X_s$ slots, the UE is not required to monitor on the active DL BWP with SCS configuration $\mu$ of the scheduling cell, more than

$$\min\left( M_{\text{PDCCH}}^{\max,X_s,\mu}, M_{\text{PDCCH}}^{\text{total},X_s,\mu} \right)$$ PDCCH candidates or more than $$\min\left( C_{\text{PDCCH}}^{\max,X_s,\mu}, C_{\text{PDCCH}}^{\text{total},X_s,\mu} \right)$$ non-overlapped CCEs per group of $X_s$ slots.

For cross-carrier scheduling, the number of PDCCH candidates for monitoring and the number of non-overlapped CCEs per span or per slot or per group of $X_s$ slots are separately counted for each scheduled cell.

The UE allocates PDCCH candidates for monitoring to USS sets for the primary cell having an active DL BWP with SCS configuration $\mu$ in a slot if the UE is not provided monitoringCapabilityConfig for the primary cell or if the UE is provided monitoringCapabilityConfig = r15monitoringcapability for the primary cell, or in the first span of each slot if the UE is provided monitoringCapabilityConfig = r16monitoringcapability for the primary cell, or in a group of $X_s$ slots for a corresponding combination $(X_s, Y_s)$ if the UE is provided monitoringCapabilityConfig = r17monitoringcapability for the primary cell, according to the following pseudocode.

If for the USS sets for scheduling on the primary cell the UE is not provided coresetPoolIndex for first CORESETs, or is provided coresetPoolIndex with value 0 for first CORESETs, and is provided coresetPoolIndex with value 1 for second CORESETs, and if $$\min\left( \gamma \cdot M_{\text{PDCCH}}^{\max,\text{slot},\mu}, M_{\text{PDCCH}}^{\text{total},\text{slot},\mu} \right) > \min\left( M_{\text{PDCCH}}^{\max,\text{slot},\mu}, M_{\text{PDCCH}}^{\text{total},\text{slot},\mu} \right)$$ or min ($\gamma \cdot$ $C_{\text{PDCCH}}^{\max,\text{slot},\mu}, C_{\text{PDCCH}}^{\text{total},\text{slot},\mu}$) $> \min\left( C_{\text{PDCCH}}^{\max,\text{slot},\mu}, C_{\text{PDCCH}}^{\text{total},\text{slot},\mu} \right)$, the following pseudocode applies only to USS sets associated with the first CORESETs. A UE does not expect to monitor PDCCH in a USS set without allocated PDCCH candidates for monitoring.

In the following pseudocode, if the UE is provided monitoringCapabilityConfig = r16monitoringcapability for the primary cell, $M_{PDCCH}^{max,slot,\mu}$ and $C_{PDCCH}^{max,slot,\mu}$ are replaced by $M_{PDCCH}^{max,(X,Y),\mu}$ and $C_{PDCCH}^{max,(X,Y),\mu}$ respectively, and $M_{PDCCH}^{total,slot,\mu}$ and $C_{PDCCH}^{total,slot,\mu}$ are replaced by $M_{PDCCH}^{total,(X,Y),\mu}$ and $C_{PDCCH}^{total,(X,Y),\mu}$ respectively.

In the following pseudocode, if the UE is provided monitoringCapabilityConfig = r17monitoringcapability for the primary cell, $M_{PDCCH}^{max,slot,\mu}$ and $C_{PDCCH}^{max,slot,\mu}$ are replaced by $M_{PDCCH}^{max,X_s,\mu}$ and $C_{PDCCH}^{max,X_s,\mu}$ respectively, and $M_{PDCCH}^{total,slot,\mu}$ and $C_{PDCCH}^{total,slot,\mu}$ are replaced by $M_{PDCCH}^{total,X_s,\mu}$ and $C_{PDCCH}^{total,X_s,\mu}$ respectively.

For all search space sets that a UE monitors PDCCH on the primary cell within a slot n, or within a group of $X_s$ slots for a corresponding combination $(X_s, Y_s)$, or within a span in slot n, denote by $S_{css}$ a set of CSS sets, except for CSS sets provided by searchSpaceBroadcast or by searchSpace-Multicast, with cardinality of $I_{css}$ and by $S_{uss}$ a set of USS sets and CSS sets provided by searchSpaceBroadcast or by searchSpace-Multicast with cardinality of $J_{uss}$ for scheduling on the primary cell. The location of search space sets $s_j$, $0 \leq j < J_{uss}$, in $S_{uss}$ is according to an ascending order of the search space set index.

Denote by $M_{S_{css}(i)}^{(L)}$, $0 \leq i < I_{css}$, the number of counted PDCCH candidates for monitoring for CSS set $S_{css}(i)$ and by $M_{S_{uss}(j)}^{(L)}$, $0 \leq j < J_{uss}$, the number of counted PDCCH candidates for monitoring for search space set $S_{uss}(j)$. If a UE indicates three-BDforSSsetLinking and is provided for search space set $s_j$, by searchSpaceLinking, a search space set $s_i$ with $s_i < s_j$, set $M_{S_{css}(j)}^{(L)} = 2 \cdot M_{S_{css}(j)}^{(L)}$ if $s_i$ and $s_j$ are CSS sets or set $M_{S_{uss}(j)}^{(L)} = 2 \cdot M_{S_{uss}(j)}^{(L)}$ if $s_i$ and $s_j$ are USS sets.

For the CSS sets in $S_{css}$, a UE monitors $M_{PDCCH}^{css} = \sum_{i=0}^{I_{css}-1} \sum_L M_{S_{css}(i)}^{(L)}$ PDCCH candidates requiring a total of $C_{PDCCH}^{css}$ non-overlapping CCEs in a slot, of in group of $X_s$ slots for a corresponding combination $(X_s, Y_s)$, or in a span.

Denote by $V_{CCE}(S_{uss}(j))$ the set of non-overlapping CCEs for search space set $S_{uss}(j)$ and by $C(V_{CCE}(S_{uss}(j)))$; the cardinality of $V_{CCE}(S_{uss}(j))$ where a UE determines the non-overlapping CCEs for search space set $S_{uss}(j)$

considering the allocated PDCCH candidates for monitoring for the CSS sets in $S_{css}$ and the allocated PDCCH candidates for monitoring for all search space sets $S_{uss}(k)$, $0 \leq k \leq j$.

Set $M_{PDCCH}^{uss} = \min(M_{PDCCH}^{max,slot,\mu}, M_{PDCCH}^{total,slot,\mu}) - M_{PDCCH}^{css}$

Set $C_{PDCCH}^{uss} = \min(C_{PDCCH}^{max,slot,\mu}, C_{PDCCH}^{total,slot,\mu}) - C_{PDCCH}^{css}$

Set $j = 0$

while $\sum_L M_{S_{uss}(j)}^{(L)} \leq M_{PDCCH}^{uss}$ AND $C(V_{CCE}(S_{uss}(j))) \leq C_{PDCCH}^{uss}$

allocate $\sum_L M_{S_{uss}(j)}^{(L)}$ PDCCH candidates for monitoring to search space set $S_{uss}(j)$

$M_{PDCCH}^{uss} = M_{PDCCH}^{uss} - \sum_L M_{S_{uss}(j)}^{(L)};$   $C_{PDCCH}^{uss} = C_{PDCCH}^{uss} - C(V_{CCE}(S_{uss}(j)));$   $j = j + 1;$   end while

[End of Reference]

In the following, the BD limits per cell (for both non-CA and CA scenarios) specified in '10.1 UE procedure for determining physical downlink control channel assignment' of 3GPP TS 38.213 are denoted as M_max and M_total, and the related CCE limits are denoted as C_max and C_total. According to 3GPP TS 38.213, in CA scenarios, the BD/CCE limit per cell is checked using min(M_max, M_total) and min(C_max, C_total). In other words, in a CA scenario with M cells, each UE checks whether the number of PDCCH candidates configured for each CC and the number of CCEs related thereto exceed min(M_max, M_total) and min(C_max, C_total) during a specific time period, respectively.

In the case of scheduling using m-CC DCI, depending on how the [criterion] is defined, the number of PDCCH candidates may be configured in units of multiple CC sets or configured individually for each CC as described in [2]. However, even if PC_m(n) is configured for multiple CCs based on [Criteria1] or [Criterion 2], the number of PDCCH candidates may still be determined for each individual CC as described in [3]. Thus, the BD/CCE limit is configured for each CC, and the overbooking check may also be performed on a CC basis. The BD/CCE limit per CC may be configured according to one of the following methods.

4.1 Method 1: For each scheduled CC scheduled via m-CC DCI, similarly to conventional s-CC scheduling, M_total and C_total are determined using M_max and C_max configured for each CC. The BD limit for the corresponding CC is set to min(M_max, M_total), and the CCE limit is set to min(C_max, C_total). If each scheduled CC has a different SCS, the BD/CCE limit is determined separately for each SCS.

4.2 Method 2: For each scheduled CC scheduled via m-CC DCI, the BD/CCE limit for each CC is set to a value obtained by multiplying M_max or C_max, which is the conventional CC-specific BD/CCE limit, by N/(N+1). For example, the BD limit is set to M_max * N/(N+1), and the CCE limit is set to C_max * N/(N+1). If [Criterion 1] is applied to the PC_m(n) configuration, N refers to the total number of CCs that may be scheduled via the m-CC DCI. If [Criterion 2] is applied, N refers to the actual number of CCs scheduled (simultaneously) via the m-CC DCI.

4.3 Method 3: A BD/CCE limit may be configured differently for each CC.

- Method 3-1: The BD/CCE limit is configured differently for each CC scheduled via m-CC DCI. For a k-th CC, the BD/CCE limit is determined using $\beta(k) * \min(M\_max, M\_total)$ and/or $\beta(k) * \min(C\_max, C\_total)$. For example, considering two CCs scheduled via the m-CC DCI, for CC#1, the BD/CCE limit is applied as $\beta(1) * \min(M\_max, M\_total)$ and $\beta(1) * \min(C\_max, C\_total)$, and for CC#2, the BD/CCE limit is applied as $\beta(2) * \min(M\_max, M\_total)$ and $\beta(2) * \min(C\_max, C\_total)$.

- Method 3-2: The BD/CCE limit is configured differently for each CC scheduled via m-CC DCI. For a k-th CC, the BD/CCE limit is determined using $\beta(k) * M\_max$ instead of M_max, and/or $\beta(k) * C\_max$ instead of C_max. In this case, by scaling $\beta(k)$, the BD limit may be determined as the minimum of the modified values of M_max and M_total (the same method may be applied to the CCE limit).

- Method 3-3: The BD/CCE limit is configured differently for each CC scheduled via m-CC DCI. For a k-th CC, the BD/CCE limit is determined using $\beta(k) * M\_total$ and/or $\beta(k) * C\_total$. In this case, by scaling $\beta(k)$, the BD limit is determined as the smaller value between the modified values of M_total and M_max, which is configured independently of $\beta(k)$ (the same method may be applied to the CCE limit).

In Methods 3-1 to 3-3 described in [4], the value of $\beta(k)$ may be predefined (based on the number of simultaneously scheduled (or schedulable) CCs) or configured (e.g., through higher layer signaling). In addition, $\beta(k)$ may be defined or configured for each CC #k such that the total sum of BD/CCE limits across all CCs (i.e., the sum of BD limits (or CCE limits) across all scheduled CCs) is constantly maintained before and after scaling. Furthermore, while $\beta$ has been represented as the same for both the BD and CCE for simplicity of the explanation, different values such as $\beta\_BD$ or $\beta\_CCE$ may be used.

Methods 3-1 to 3-3 in [4] may be necessary for the following reasons. Each scheduled CC to be simultaneously scheduled via m-CC DCI may be scheduled by m-CC DCI or s-CC DCI as described in [1]. Depending on the operation method for the m-CC DCI, a scheduled CC may be set as a reference cell. Additionally, as described in [3], the number of PDCCH candidates may vary for each scheduled CC. Thus, when m-CC DCI is introduced/configured, if the BD/CCE limit is configured differently for each CC in some of the configuration methods described in [1], [2], and [3], Method 3 in 4.3 may be useful.

The BD/CCE limit configured according to one of the methods in [4] may be used to determine overbooking for each CC (and for each unit time period).

As described in [2], if the number of PDCCH candidates per AL n for m-CC DCI is configured in units of multiple CC sets based on [Criterion 1] or [Criterion 2], the BD/CCE limit may also be configured in units of multiple CC sets. In addition, overbooking may be determined based on the BD/CCE limit and PC_m(n) configured in units of multiple CC sets.

Additionally, if some of multiple CCs scheduled simultaneously via m-CC DCI is incapable of being used, only a PDSCH/PUSCH scheduled on the corresponding CCs may be dropped, while scheduling on other CCs may be carried out validly. In this case, an unusable CC refers to a CC where a PDSCH/PUSCH is scheduled or indicated via m-CC DCI but the PDSCH/PUSCH is not actually transmitted. The reasons why the PDSCH/PUSCH is not transmitted include a case where the scheduled PDSCH/PUSCH does not comply with a (semi-static) DL/UL configuration configured for the cell (e.g., due to an overlap in time with semi-static DL/UL symbols) and/or a case where the scheduled PDSCH/PUSCH overlaps with other signals/channels such as an SSB and thus is not actually transmitted.

When the ref-CC is configured according to the operational methods described in [1] such as Option 2 in 1.2 and Option 2a in 1.2-a, if the ref-CC becomes unusable, the UE may ignore or drop the corresponding m-CC DCI. Similarly, if the scheduling cell becomes unusable, or if one of the PCell, PSCell, and PUCCH SCell becomes unusable, the UE may also ignore or drop the corresponding m-CC DCI.

Additionally, to reduce the BD burden on the UE for m-CC DCI, constraints may be imposed on monitoring of PDCCH candidates corresponding to the m-CC DCI. One (or a combination of two or more) of the following methods may be configured.

- When both s-CC DCI and m-CC DCI are capable of scheduling DL or UL transmission (for a specific scheduled cell), the UE may be configured not to perform monitoring for the s-CC DCI and m-CC DCI simultaneously within a specific time period (e.g., slot). For example, when the UE is configured with m-CC DCI, the UE may operate by expecting that no PDCCH MO for the m-CC DCI is configured in a slot where an MO for s-CC DCI is configured,
- When both s-CC DCI and m-CC DCI are capable of scheduling DL or UL transmission (for a specific scheduled cell), if overbooking occurs, an SS set for the m-CC DCI (which typically occupies more CCE resources per DCI) may be dropped first. On the other hand, when both s-CC DCI and m-CC DCI are capable of scheduling DL or UL transmission, if overbooking occurs, an SS set for the s-CC DCI (which typically has larger DCI overhead per CC) may be dropped first.
- When both s-CC DCI and m-CC DCI are capable of scheduling DL or UL transmission (for a specific scheduled cell) (or when simultaneous monitoring is required), the UE may drop either the s-CC DCI or m-CC DCI (or both of the s-CC DCI and m-CC DCI) depending on the SS set configuration method (alternatively, the UE may be predefined or configured to operate as follows).

■ Alt-1: Both an SS set for s-CC DCI and an SS set for m-CC DCI may be configured, but it may be necessary to ensure that simultaneous monitoring of the two DCI types is not allowed within the same MO (or the same slot). In other words, regardless of whether overbooking occurs (i.e., whether the maximum BD budget exceeds), it may be necessary to ensure that simultaneous monitoring of the two DCI types is not allowed in the same MO or slot. Accordingly, when both the SS set for the s-CC DCI and the SS set for the m-CC DCI are configured in the same MO (or slot), one of the following methods may be configured to handle the SS set for s-CC DCI and the SS set for m-CC DCI.

♦ The UE may be configured to monitor only the SS set for specific DCI, i.e., one of the s-CC DCI and m-CC DCI and drop monitoring of the SS set for the other DCI. In this case, the specific DCI may be predefined as either the s-CC DCI or m-CC DCI. Alternatively, it may be configured via RRC signaling which one of the SS set for the s-CC DCI and the SS set for the m-CC DCI is to be monitored.

♦ If both the s-CC DCI and m-CC DCI are configured simultaneously in each SS set, the SS sets may be dropped in descending order of index (i.e., both the s-CC and m-CC in the corresponding SS set may be dropped). Alternatively, the dropping may be performed in the following order: the s-cc of the SS set with the highest index -> the m-cc of the SS set with the highest index -> the s-cc of the SS set with the next highest index -> the m-cc of the SS set with the next highest index.

♦ If only one of the s-CC DCI and m-CC DCI is configured in each SS set, the SS sets may be dropped in descending order of index (regardless of the s-CC DCI or m-CC DCI). Alternatively, the SS set with the highest index for the s-CC (or m-CC) may be dropped first, followed by the SS set with the highest index for the m-CC (or s-CC).

♦ If only one of the s-CC DCI and m-CC DCI is configured in each SS set (or regardless thereof), when the MOs for the s-CC and m-CC overlap, the s-CC (or m-CC) DCI may be dropped first.

■ Alt-2: Both an SS set for s-CC DCI and an SS set for m-CC DCI may be configured (in the same or different SS sets), and simultaneous monitoring may be allowed in the same MO/slot. However, if the maximum BD is exceeded in the same MO/slot, it may be necessary to drop a specific SS set. To this end, one of the following methods may be configured.

♦ The UE may be configured to drop first the SS set for specific DCI, i.e., one of the s-CC DCI and m-CC DCI. In this case, the specific DCI may be predefined as either the s-CC DCI or m-CC DCI. Alternatively, it may be configured via RRC signaling which one of the SS set for the s-CC DCI and the SS set for the m-CC DCI is dropped first.

♦ If both the s-CC DCI and m-CC DCI are configured simultaneously in each SS set, the SS sets may be dropped in descending order of index (i.e., both the s-CC and m-CC in the corresponding SS set may be dropped). Alternatively, the dropping may be performed in the following order: the s-cc of the SS set with the highest index -> the m-cc of the SS set with the highest index -> the s-cc of the SS set with the next highest index -> the m-cc of the SS set with the next highest index.

♦ If only one of the s-CC DCI and m-CC DCI is configured in each SS set, the SS sets may be dropped in descending order of index (regardless of the s-CC DCI or m-CC .DCI). Alternatively, the SS set with the highest index for the s-CC (or m-CC) may be dropped first, followed by the SS set with the highest index for the m-CC (or s-CC)

♦ If only one of the s-CC DCI and m-CC DCI is configured in each SS set (or regardless thereof), when the MOs for s-CC and m-CC overlap, the s-CC (or m-CC) DCI may be dropped first.

[5] Method of Determining Co-Scheduled Cells for Multi-Cell Scheduling Based on SS Linking

In Rel-16/17 cross-carrier scheduling, an SS set configured on a scheduled cell may be SS-linked to a scheduling cell. In other words, the SS set of the scheduling cell may be configured with the same SS set index (or ID) as the SS set of the scheduled cell. In this case, only the AL and the number of PDCCH candidates for each AL n may be separately configured for the scheduled cell. In other words, when an SS set with the same SS set index or ID (e.g., K) configured on a scheduled cell is also configured on a scheduling cell, it indicates that SS set #K is linked between the scheduled cell and the scheduling cell (SS linking). In addition, a PDCCH carrying DCI for the scheduled cell may be scheduled/transmitted through SS set #K on the scheduling cell. The AL and the number of PDCCH candidates (PCs) per AL n may be determined based on the value configured for SS set #K on the scheduled cell.

Multiple scheduled cells may be simultaneously scheduled via m-CC DCI, and the SS linking between the scheduling cell and each scheduled cell may be (extendedly) applied through m-cc DCI scheduling. For multi-cell scheduling using m-CC DCI, when an SS is configured on the scheduling cell and an SS that is SS-linked to the scheduling cell is also configured on some (or all) co-scheduled cells, a method of determining a co-scheduled cell capable of multi-cell scheduling through m-cc DCI is proposed. One (or a combination of two or more) of the proposed methods may be applied.

The methods described below may be applied (independently) to each SS set index (or ID) configured on a scheduling cell (for convenience, an SS set (index/ID) is referred to as an SS (index/ID)). In other words, for each proposed method, a set of co-scheduled cells for multi-cell scheduling through a specific SS (e.g., SS #k) and multi-cell scheduling through another specific SS (e.g., SS #n) (i.e., a set of cells scheduled simultaneously through single/identical m-cc DCI) may be the same or different.

5.1 Method 1: A set of co-scheduled cells that consist only of scheduled cells SS-linked (to a scheduling cell) may be simultaneously scheduled by m-cc DCI. Specifically, for a specific SS (e.g., SS #k) on the scheduling cell, scheduled cell(s) that have the same index/ID as that of SS #k may be determined. In this case, m-cc DCI transmitted via SS #k on the scheduling cell may schedule a set of co-scheduled cells consisting only of the cell(s). To this end, a PDCCH candidate set may be configured/set for SS #k. For SSs with different indices (or IDs) configured in the scheduling cell, a set of co-scheduled cells composed of cells where a specific SS (e.g., SS #k) is configured (based on SS linking) may be multi-cell scheduled through the SS (e.g., SS #k), and a set of co-scheduled cells composed of cells where another SS (e.g., SS #n) is configured (based on SS linking) may be multi-cell scheduled through the SS (in this case, SS #n).

■ For example, when a schedulable cell set for multi-cell scheduling through m-cc DCI (i.e., the entire set of cells schedulable via m-cc DCI) is {cell #1, cell #2, cell #3, cell #4}, if SS #k linked to a scheduling cell is configured only for {cell #1, cell #2, cell #3}, the m-cc DCI may schedule a co-scheduled cell set consisting only of {cell #1, cell #2, cell #3} via SS #k on the scheduling cell. In order for the m-cc DCI to schedule {cell #1, cell #2, cell #3} simultaneously, an SS with the same index as the SS of the scheduling cell needs to be configured for all of cell #1, cell #2, and cell #3 based on SS linking.

5.2 Method 2: A set of co-scheduled cells including all scheduled cells SS-linked to a scheduling cell may be simultaneously scheduled by m-cc DCI. Specifically, scheduled cell(s) that have the same index/ID as a specific SS (e.g., SS #k) in the scheduling cell may be determined. In this case, m-cc DCI transmitted via SS #k on the scheduling cell may schedule one or more co-scheduled cell sets that include all of the cell(s). To this end, a PDCCH candidate set may be configured/set for SS #k. That is, the cell set includes all scheduled cells SS-linked to the scheduling cell, and cells with no SS link may also be included in the cell set. For SSs with different indices (or IDs) configured in the scheduling cell, a set of co-scheduled cells composed of cells where a specific SS (e.g., SS #k) is configured (based on SS linking) may be multi-cell scheduled through the SS (e.g., SS #k), and a set of co-scheduled cells composed of cells where another SS (e.g., SS #n) is configured (based on SS linking) may be multi-cell scheduled through the SS (in this case, SS #n).

■ For example, when a schedulable cell set for multi-cell scheduling through m-cc DCI is {cell #1, cell #2, cell #3, cell #4}, if SS #k linked to a scheduling cell is configured only for {cell #1, cell #2, cell #3}, the m-cc DCI may schedule one or more co-scheduled cell sets that include all of {cell #1, cell #2, cell #3} (e.g., {cell #1, cell #2, cell #3} or {cell #1, cell #2, cell #3, cell #4}) via SS #k on the scheduling cell. In other words, the co-scheduled cells may consist of all cells where the linked SS is configured, and/or a union of the cells and other cells where the same SS is not configured (based on SS linking).

5.3 Method 3: A set of co-scheduled cells that includes at least one scheduled cell SS-linked to a scheduling may be simultaneously scheduled by m-cc DCI. Specifically, for a specific SS (e.g., SS #k) on a scheduling cell, scheduled cell(s) having the same index/ID as SS #k may be determined. In this case, m-cc DCI transmitted via SS #k on the scheduling cell may schedule one or more co-scheduled cell sets that include at least one of the cell(s). To this end, a PDCCH candidate set may be configured/set for SS #k. In other words, the co-scheduled cell set needs to include at least one scheduled cell SS-linked to the scheduling cell, and cells with no SS link may also be included in the cell set.

For SSs with different indices (or IDs) configured in the scheduling cell, a set of co-scheduled cells composed of cells where a specific SS (e.g., SS #k) is configured (based on SS linking) may be multi-cell scheduled through the SS (e.g., SS #k), and a set of co-scheduled cells composed of cells where another SS (e.g., SS #n) is configured (based on SS linking) may be multi-cell scheduled through the SS (in this case, SS #n).

■ For example, when a schedulable cell set for multi-cell scheduling through m-cc DCI is {cell #1, cell #2, cell #3, cell #4}, if SS #k linked to a scheduling cell is configured only for {cell #1, cell #2, cell #3}, the m-cc DCI may schedule one or more co-scheduled cell sets configured to include at least one cell of {cell #1, cell #2, cell #3} (e.g., {cell #1, #2}, {cell #1, #4}, {cell #1, #3, #4}, etc.) via SS #k on the scheduling cell. In other words, at least one of the co-scheduled cells is SS-linked to the scheduling cell.

5.4 Method 4: A set of co-scheduled cells consisting of all or some of scheduled cells SS-linked to a scheduling cell may be scheduled by m-cc DCI. Specifically, for a specific SS (e.g., SS #k) on the scheduling cell, scheduled cells with SS #k having the same index/ID may be determined. In this case, the m-cc DCI transmitted via SS #k on the scheduling cell may schedule one or more co-scheduled cell sets consisting of all or some of the cells. To this end, a PDCCH candidate set may be configured/set for SS #k. In other words, the co-scheduled cell set or some of the cells in the set are set/configured as scheduled cells SS-linked to the scheduling cell, and cells with no SS link may not be included in the cell set.

■ For example, when a schedulable cell set for multi-cell scheduling through m-cc DCI is {cell #1, cell #2, cell #3, cell #4}, if SS #k SS-linked to a scheduling cell is configured only for {cell #1, cell #2, cell #3}, the m-cc DCI may schedule one or more co-scheduled cell sets consisting of all or some of {cell #1, cell #2, cell #3} (e.g., {cell #1}, {cell #2}, {cell #3}, {cell #1, #2}, {cell #1, cell #3}, {cell #2, cell #3}, {cell #1, cell #2, cell #3}) via SS #k on the scheduling cell. In other words, this method is similar to [5.1 Method 1] in that SS linking needs to be established for all co-scheduled cells. However, the method allows all or some of the SS-linked cells to be scheduled simultaneously (while all SS-linked scheduled cells are simultaneously scheduled in [5.1 Method 1]).

5.5 Method 5: Multi-cell scheduling through m-cc DCI may be indicated/configured to be possible only when an SS SS-linked to a scheduling cell is configured for all cells in a schedulable cell set. Specifically, for a specific SS (e.g., SS #k) on the scheduling cell, scheduled cell(s) having the same index/ID as SS #k may be determined. In this case, m-cc DCI transmitted via SS #k on the scheduling cell may schedule any (or all) co-scheduled cell set(s) only if the cell set is the same as the schedulable cell set. To this end, a PDCCH candidate set may be set/configured for SS #k. In other words, all cells belonging to the co-scheduled cell set are set/configured as scheduled cells SS-linked to the scheduling cell, and all cells in the schedulable cell set are SS-linked to the scheduling cell.

■ For example, when a schedulable cell set for multi-cell scheduling through m-cc DCI is {cell #1, cell #2, cell #3, cell #4}, if SS #k SS-linked to a scheduling cell is configured only for {cell #1, cell #2, cell #3} (in other words, no SS link is established for some cells), transmission of the m-cc DCI and multi-cell scheduling through SS #k on the scheduling cell may not be permitted. In other words, to schedule the schedulable cell set via the m-cc DCI, an SS SS-linked to the scheduling cell needs to be configured for all of {cell #1, cell #2, cell #3, cell #4}.

Additionally, in the proposed methods above, (scheduled) cells (or (scheduled) cell set) may be limited to (scheduled) cells SS-linked to a scheduling cell for the following configurations described in [2], [3], and/or [4]: the method for configuring the number of PDCCH candidates per AL for m-cc DCI (configured in the m-cc DCI), the method for configuring/applying the number of PDCCH candidates per AL configured/applied to each (scheduled) cell, the BD counting method when monitoring m-cc DCI, the BD counting method configured/applied to each (scheduled) cell, the BD/CCE limit (or BD/CCE budget) for m-cc DCI (configured in the m-cc DCI), and/or the BD/CCE limit (or BD/CCE budget) configured/applied to each (scheduled) cell. In other words, (scheduled) cells having no SS link with the scheduling cell may be excluded when applying the proposed methods. For example, in the proposed methods, a specific representative CC or ref-CC (or ref-cell) may be determined or configured as a specific one cell among the (scheduled) cells SS-linked to the scheduling cell.

Additionally, the number of PDCCH candidates per AL for m-cc DCI may be determined/configured based on the number of PDCCH candidates per AL configured for a specific ref-cell among (scheduled) cells SS-linked to a scheduling cell. In this case, one of the methods described in [2] or [3] may be applied to determine/configure the number of PDCCH candidates per AL for m-cc DCI. The specific ref-cell may be determined according to the methods described in [1]. Furthermore, based on the determined/configured number of PDCCH candidates per AL, the methods described in [3] (or [4]) may be applied to determine (scheduled) cells for which BD attempts are counted for monitoring the m-cc DCI. When applying the methods, (scheduled) cells (or (scheduled) cell set) are limited to the (scheduled) cells SS-linked to the scheduling cell. In other words, (scheduled) cells having no SS link with the scheduling cell may be excluded when applying the proposed methods. For example, in the proposed methods, a specific representative CC or ref-CC (or ref-cell) may be determined or configured as a specific one cell among the (scheduled) cells SS-linked to the scheduling cell.

The NR UE may be configured with searchSpaceType and DCI formats (e.g., dci-Formats) through an RRC parameter SearchSpace. Methods 1 to 5 in [5] described above may be applied limitedly, depending on the DCI format of an SS configured in a scheduling cell and/or scheduled cell. For the convenience of explanation, a DCI format configured for m-cc DCI (in the SS configuration) is referred to as format_X, and a DCI format configured for legacy DCI (in the SS configuration) is referred to as format_L (e.g., formats0-0-And-1-0, formats0-1-And-1-1, etc.). The methods described above may be applied limitedly when the DCI format of the SS configured in the scheduling and/or scheduled cell is format_X.

5-(1) When the DCI format for SS #k configured on a scheduling cell is format_X, SS linking between the scheduling cell and scheduled cell(s) may be established through SS #k. In other words, SS set linking between the scheduling cell and scheduled cell(s) for multi-cell scheduling may be configured/applied through an SS set where format_X is configured. In this case, the methods described above may be applied to establish the SS set linking and/or determine the scheduled cell(s). For example, in Methods 1/4/5 of [5], when format_X is configured for SS #k configured on a scheduling cell, (scheduled) cells equally configured with SS #k (i.e., SS-linked) may be scheduled through m-cc DCI. In Methods 2/3 of [5], when format_X is configured for SS #k configured on a scheduling cell, a set of (scheduled) cells that include cells equally configured with SS #k (i.e., SS-linked) may be scheduled through m-cc DCI.

■ When format_X is configured for SS #k configured on a scheduling cell, format_X may also be configured for SS #k on (scheduled) cells that are scheduled through m-cc DCI

■ Alternatively, when format_X is configured for SS #k configured on a scheduling cell, format_L may be configured for SS #k on (scheduled) cells that are scheduled through m-cc DCI. In this case, format_L may be limited to legacy DCI formats 0_1 or 1_1.

■ Alternatively, when format_X is configured for SS #k configured on a scheduling cell, no DCI format may be configured on SS #k on (scheduled) cells scheduled through m-cc DCI.

(2) When both format_X and format_L are configured for SS #k configured on a scheduling cell, SS linking between the scheduling cell and scheduled cell(s) may be established through SS #k. In this case, format_L may be limited to legacy DCI formats 0_1 or 1_1. In other words, SS set linking between the scheduling cell and scheduled cell(s) for multi-cell scheduling may be configured/applied through an SS set where format_X is configured. The methods described above may be applied to establish the SS set linking and/or determine the scheduled cell(s). Alternatively, Methods 2 and 3 of [5], which allow for the inclusion of scheduled cells having no SS link with the scheduling cell, may be applied.

■ When both format_X and format_L are configured as the DCI formats for SS #k configured on a scheduling cell, either format_X set or both format_X and format_L may be configured for SS #k on (scheduled) cells scheduled through m-cc DCI

■ Alternatively, when both format_X and format_L are configured for SS #k configured on a scheduling cell, format_L may be configured for SS #k on (scheduled) cells scheduled through m-cc DCI. In this case, format_L may be limited to legacy DCI formats 0_1 or 1_1.

■ Alternatively, when both format_X and format_L are configured for SS #k configured on a scheduling cell, no DCI format may be configured for SS #k on (scheduled) cells scheduled through m-cc DCI.

Additionally (to elaborate), in scheduling through m-cc DCI, if format_X is defined to be configurable on a scheduled cell, an SS link may only be established for an SS set where format_X is configured (on the scheduled cell). If only format_L is configurable on the scheduled cell (while format_X is defined not to be configured), an SS link may only be established for an SS set where specific format_L is configured (on the scheduled cell). In this case, specific format_L may be DCI format 0_1 or DCI format 1_1 (and/or DCI format 0_2 or DCI format 1_2).

For example, if format_X is defined to be configurable in a scheduled cell (while format_X is defined to be configurable in a scheduling cell), an SS link may only be established between an SS set on the scheduling cell where format_X is configured and an SS set on the scheduled cell where format_X is configured (having the same index/ID as the SS set in the scheduling cell). In another example, if only format_L is configurable in a scheduled cell (while format_X is defined to be configurable in a scheduling cell), an SS link may only be established between an SS set on the scheduling cell where format_X is configured and an SS set on the scheduled cell (e.g., DCI format 0_1/1_1 and/or DCI format 0_2/1_2) is configured (having the same index/ID as the SS set in the scheduling cell).

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

<u>Implementation examples</u>

FIG. 4 is a flowchart illustrating a signal monitoring method according to embodiments of the present disclosure.
Referring to FIG. 4, the embodiment performed by a UE may include receiving an SS set configuration (S401) and monitoring PDCCH candidates based on the SS set configuration (S403).
The monitoring of the PDCCH candidates may be performed based on one or more of the operations described in Sections [1] to [5].
For example, referring to Section [2], the number of PDCCH candidates per CCE AL may be configured for the UE through the SS set configuration. Since the UE receives the SS set configuration from the BS, the UE receives information on the number of PDCCH candidates per CCE AL via the SS set configuration.
The UE may monitor multiple PDCCH candidates to decode a PDCCH carrying multi-cell DCI. A cell on which the PDCCH carrying the multi-cell DCI is received is defined as a scheduling cell. If a DCI format for the multi-cell DCI is referred to as DCI format_X, information on DCI format_X is included in the SS set configuration. The UE monitors the PDCCH candidates for the DCI format on the scheduling cell based on the SS set configuration. The number of PDCCH candidates monitored may correspond to the number of PDCCH candidates per AL configured based on the SS set configuration.
The multi-cell DCI schedules PDSCHs or PUSCHs on different scheduled cells. Therefore, DCI format_X is a DCI format for scheduling PDSCHs or PUSCHs on different scheduled cells. In the specification and claims, the term "DCI" may be used interchangeably with the term "DCI format".
Referring to the criteria in Section [2], the number of PDCCH candidates per AL, which is denoted as PC_m(n), is configured based on a set of scheduled cells schedulable by the multi-cell DCI.
Specifically, referring to Criterion 2 in Section [2], PC_m(n), for example, for multi-cell DCI capable of simultaneously scheduling up to three scheduled cells, it is independently configured for each set of all or some of the three scheduled cells. If the multi-cell DCI is capable of simultaneously scheduling up to n scheduled cells, PC_m(n) is independently configured for each set of all or some of the n scheduled cells. The set of all or some of the scheduled cells consists of cells that are actually scheduled simultaneously by a single piece of DCI at a given time from among the n scheduled cells that may be simultaneously scheduled.
For example, if multi-cell DCI capable of scheduling up to n scheduled cells is received in slot A and the multi-cell DCI schedules PDSCHs or PUSCHs for three scheduled cells, PC-m(n) for the multi-cell DCI received in slot A is configured based on the values corresponding to those three scheduled cells.
If multi-cell DCI capable of scheduling up to n scheduled cells is received in slot B and the multi-cell DCI schedules PDSCHs or PUSCHs for four scheduled cells, PC_m(n) for the multi-cell DCI received in slot B is configured based on the values corresponding to the four scheduled cells.
If multi-cell DCI capable of scheduling up to n scheduled cells is received in slot C and if the multi-cell DCI schedules PDSCHs or PUSCHs for three scheduled cells but at least one of the three cells is different from cells scheduled in slot A, PC_m(n) for the multi-cell DCI received in slot A and PC_m(n) for the multi-cell DCI received in slot C are configured independently.
Referring to Method 3 in Section [2], PC_m(n) may be configured based on the number of PDCCH candidates per AL for a specific representative cell among scheduled cells. According to Criterion 2 in Section [2], since PC_m(n) is configured based on a set of cells schedulable by m-cc DCI, the representative cell is one of the cells that may be scheduled simultaneously by the DCI.
The representative cell may be a cell with the lowest index among all simultaneously schedulable cells, a cell with the highest index among all simultaneously schedulable cells, a cell with the minimum number of PDCCH candidates for a specific AL, or a cell with the maximum number of PDCCH candidates for a specific AL. Although the set of cells that are actually scheduled may change at each time the DCI is transmitted, the range of all cells schedulable by the DCI remains constant (unless reconfigured through RRC signaling) regardless of the transmission time of the DCI. Therefore, the representative cell may remain consistent even if the set of simultaneously scheduled cells changes. Therefore, even if the representative cell is not included in the set of actually scheduled cells at a specific point in time, PC_m(n) may still be configured based on the number of PDCCH candidates per A) for the representative cell among the scheduled cells.
Alternatively, if the representative cell is fixed through higher layer signaling, the set of cells scheduled by the multi-cell DCI may always include the representative cell.

According to Method 3 in Section [2], PC_m(n) may be configured to be equal to the number of PDCCH candidates per CCE AL configured for the representative cell. Alternatively, PC_m(n) may be set as part of the number of PDCCH candidates per CCE AL configured for the representative cell. Therefore, the SS set configuration received by the UE for monitoring the PDCCH candidates for the DCI format on the scheduling cell may be a SS set configuration for the representative cell.

According to Section [5], the SS of the scheduling cell is linked to the SS of at least one of the scheduled cells. When the SS configured in the scheduling cell and the SS configured in the scheduled cell have the same SS ID (configured by searchSpaceId), the SSs are considered linked (the SSs with the same searchSpaceId in the scheduled cell and scheduling cell are linked to each other).

When a scheduled cell where an SS linked to the SS of the scheduling cell is referred to as a specific cell, there may be a plurality of specific cells among scheduled cells. According to Method 3 in Section [5], a set of cells that are actually scheduled by multi-cell DCI may include both specific cells and non-specific cells. A non-specific cell refers to a cell having configured no SS linked to the SS of the scheduling cell.

Additionally, according to Section [5], a DCI format may be configured on the scheduling cell through the SS set configuration (e.g., the parameter SearchSpace via RRC signaling). Table 11 shows the parameters used for configuring the conventional DCI formats.

[Table 11]

| |
|---|
| dci-Format0-0-AndFormat1-0<br>If configured, the UE monitors the DCI formats 0_0 and 1_0 according to TS 38.213 [13], clause 10.1. |
| dci-Format2-0<br>If configured, UE monitors the DCI format 2_0 according to TS 38.213 [13], clause 10.1, 11.1.1. |
| dci-Format2-1<br>If configured, UE monitors the DCI format 2_1 according to TS 38.213 [13], clause 10.1, 11.2. |
| dci-Format2-2<br>If configured, UE monitors the DCI format 2_2 according to TS 38.213 [13], clause 10.1, 11.3. |
| dci-Format2-3<br>If configured, UE monitors the DCI format 2_3 according to TS 38.213 [13], clause 10.1, 11.4 |
| dci-Format2-4<br>If configured, UE monitors the DCI format 2_4 according to TS 38.213 [13], clause 11.2A. |
| dci-Format2-5<br>If configured, IAB-MT monitors the DCI format 2_5 according to TS 38.213 [13], clause 14. |
| dci-Format2-6<br>If configured, UE monitors the DCI format 2_6 according to TS 38.213 [13], clause 10.1, 10.3. DCI format 2_6 can only be configured on the SpCell. |
| dci-Format2-7<br>If configured, UE monitors the DCI format 2_7 according to TS 38.213 [13], clause 10.1, 10.4A. |
| dci-Format4-0<br>If configured, the UE monitors the DCI format 4_0 with CRC scrambled by MCCH-RNTI/G-RNTI according to TS 38.213 [13], clause [10.1]. |
| dci-Format4-1-AndFormat4-2<br>If configured, the UE monitors the DCI format 4_1 and 4_2 with CRC scrambled by G-RNTI/G-CS-RNTI according to TS 38.213 [13], clause [11.1]. |
| dci-Format4-1<br>If configured, the UE monitors the DCI format 4_1 with CRC scrambled by G-RNTI/G-CS-RNTI according to TS 38.213 [13], clause [10.1]. |
| dci-Format4-2<br>If configured, the UE monitors the DCI format 4_2 with CRC scrambled by G-RNTI/G-CS-RNTI according to TS 38.213 [13], clause [10.1]. |
| dci-Formats<br>Indicates whether the UE monitors in this USS for DCI formats 0-0 and 1-0 or for formats 0-1 and 1-1. |

(continued)

| dci-FormatsExt |
| --- |
| If this field is present, the field dci-Formats is ignored and dci-FormatsExt is used instead to indicate whether the UE monitors in this USS for DCI format 0_2 and 1_2 or formats 0_1 and 1_1 and 0_2 and 1_2 (see TS 38.212 [17], clause 7.3.1 and TS 38.213 [13], clause 10.1). This field is not configured for operation with shared spectrum channel access in this release. |
| dci-Formats-MT |
| Indicates whether the IAB-MT monitors the DCI formats 2-5 according to TS 38.213 [13], clause 14. |
| dci-FormatsSL |
| Indicates whether the UE monitors in this USS for DCI formats 0-0 and 1-0 or for formats 0-1 and 1-1 or for format 3-0 or for format 3-1 or for formats 3-0 and 3-1. If this field is present, the field dci-Formats is ignored and dci-FormatsSL is used. |

When a DCI format for multi-cell DCI is referred to as DCI format_X, a parameter for configuring DCI format_X may be represented as dci-FormatX. The dci-FormatX parameter includes only information on the DCI format for the multi-cell DCI. X may be expressed with specific format numbers, similar to conventional formats, such as 0_3, 1_3, 5_0, 5_1, 5_2, 6_0, 6_1, 6_2, etc.

Alternatively, the parameter for configuring DCI format_X may be represented as dci-FormatX-AndFormatL. The dci-FormatX-AndFormatL parameter includes information on both the DCI format for the multi-cell DCI and a conventional DCI format that is not for the multi-cell DCI. X may be expressed with specific format numbers, similar to conventional formats, such as 0_3, 1_3, 5_0, 5_1, 5_2, 6_0, 6_1, 6_2, etc. L represents one of the conventional DCI formats, such as 0_0, 0_1, 1_0, 1_1, etc.

An SS is configured in the scheduling cell through the dci-FormatX parameter and/or the dci-FormatX-AndFormatL parameter. If the SS ID of the SS configured in the scheduling cell is the same as the SS ID of the SS configured in a specific scheduled cell, a link is established between the two SSs.

In addition to the operations described in FIG. 4, one or more of the operations described in FIGS. 1 to 3 and/or the operations for 'DCI for scheduling PDSCHs or PUSCHs on multiple serving cells' and described in Sections [1] to [5] may be combined and additionally performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

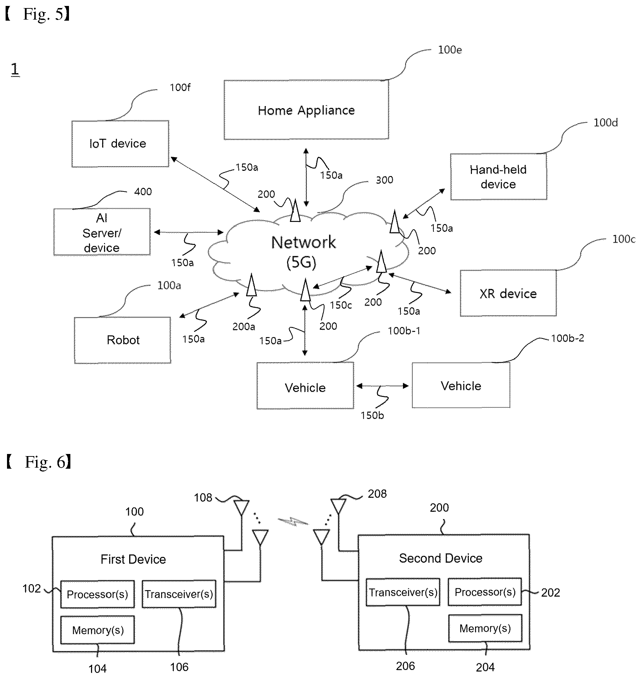

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

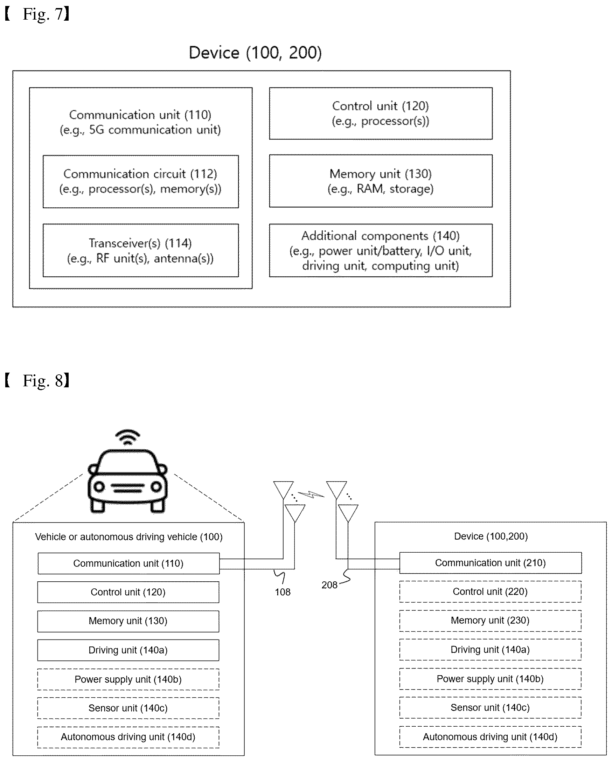

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

As described above, the present disclosure is applicable to various wireless communication systems.

## Claims

1.   A method of monitoring a control signal by a user equipment (UE) in a wireless communication system, the method comprising:

receiving a search space set configuration including information on a number of physical downlink control channel (PDCCH) candidates for each control channel element (CCE) aggregation level; and
monitoring the PDCCH candidates for a downlink control information (DCI) format on a scheduling cell based on the search space set configuration,
wherein the DCI format is a DCI format for scheduling physical downlink shared channels (PDSCHs) or physical uplink shared channels (PUSCHs) on different scheduled cells, and
wherein the number of the PDCCH candidates is configured based on a set of all or some of the scheduled cells.

2.   The method of claim 1, wherein the set includes cells actually scheduled simultaneously among the scheduled cells schedulable by the DCI format.

3.   The method of claim 1, wherein the number of the PDCCH candidates is configured independently for each set.

4.   The method of claim 1, wherein the number of the PDCCH candidates is determined based on a representative cell included in the set.

5.   The method of claim 4, wherein the number of the PDCCH candidates is equal to a number of PDCCH candidates for each CCE aggregation level configured for the representative cell.

6.   The method of claim 4, wherein the search space set configuration is a search space set configuration for the representative cell.

7.   The method of claim 1, wherein a search space configured on the scheduling cell and a search space configured on at least one specific cell among the scheduled cells are linked to each other through a same search space identifier (ID).

8.   The method of claim 7, wherein the set includes not only the specific cell but also cells other than the specific cell.

9.   The method of claim 7, wherein a search space set configuration for the scheduling cell includes a parameter for configuring the DCI format, and
wherein the parameter includes only information on the DCI format.

10.   The method of claim 7, wherein a search space set configuration for the scheduling cell includes a parameter for configuring the DCI format, and

wherein the parameter includes information on the DCI format and another DCI format different from the DCI format.

11. A user equipment (UE) configured to monitor a signal in a wireless communication system, the UE comprising:

> at least one transceiver;
> at least one processor; and
> at least one memory operably connected to the at least one processor and storing instructions that, when executed, cause the at least one processor to perform specific operations comprising:

>> receiving a search space set configuration including information on a number of physical downlink control channel (PDCCH) candidates for each control channel element (CCE) aggregation level; and
>> monitoring the PDCCH candidates for a downlink control information (DCI) format on a scheduling cell based on the search space set configuration,
>> wherein the DCI format is a DCI format for scheduling physical downlink shared channels (PDSCHs) or physical uplink shared channels (PUSCHs) on different scheduled cells, and
>> wherein the number of the PDCCH candidates is configured based on a set of all or some of the scheduled cells.

12. An apparatus for a user equipment (UE), the apparatus comprising:

> at least one processor; and
> at least one computer memory operably connected to the at least one processor and configured to, when executed, cause the at least one processor to perform operations comprising:

>> receiving a search space set configuration including information on a number of physical downlink control channel (PDCCH) candidates for each control channel element (CCE) aggregation level; and
>> monitoring the PDCCH candidates for a downlink control information (DCI) format on a scheduling cell based on the search space set configuration,
>> wherein the DCI format is a DCI format for scheduling physical downlink shared channels (PDSCHs) or physical uplink shared channels (PUSCHs) on different scheduled cells, and
>> wherein the number of the PDCCH candidates is configured based on a set of all or some of the scheduled cells.

13. A computer-readable non-volatile storage medium comprising at least one computer program configured to cause at least one processor to perform operations comprising:

> receiving a search space set configuration including information on a number of physical downlink control channel (PDCCH) candidates for each control channel element (CCE) aggregation level; and
> monitoring the PDCCH candidates for a downlink control information (DCI) format on a scheduling cell based on the search space set configuration,
> wherein the DCI format is a DCI format for scheduling physical downlink shared channels (PDSCHs) or physical uplink shared channels (PUSCHs) on different scheduled cells, and
> wherein the number of the PDCCH candidates is configured based on a set of all or some of the scheduled cells.

【 Fig. 1】

【 Fig. 2】

【 Fig. 3】

【 Fig. 4】

【 Fig. 5】

【 Fig. 6】

【 Fig. 7】

## Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【 Fig. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

| | INTERNATIONAL SEARCH REPORT | International application No. |
|---|---|---|
| | | **PCT/KR2023/005741** |

**A.    CLASSIFICATION OF SUBJECT MATTER**

**H04W 72/23**(2023.01)i; **H04W 72/12**(2009.01)i; **H04L 5/00**(2006.01)i; **H04L 1/00**(2006.01)i

According to International Patent Classification (IPC) or to both national classification and IPC

**B.    FIELDS SEARCHED**

Minimum documentation searched (classification system followed by classification symbols)

H04W 72/23(2023.01); H04B 7/024(2017.01); H04L 1/00(2006.01); H04L 27/26(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH, 후보(candidate), 개수(number), DCI, SSS

**C.    DOCUMENTS CONSIDERED TO BE RELEVANT**

| Category* | Citation of document, with indication, where appropriate, of the relevant passages | Relevant to claim No. |
|---|---|---|
| A | US 2022-0104185 A1 (ELECTRONICS AND TELECOMMUNICATIONS RESEARCH INSTITUTE) 31 March 2022 (2022-03-31)<br>    See paragraphs [0007]-[0026]; and claims 1-20. | 1-13 |
| A | WO 2022-031950 A1 (IDAC HOLDINGS, INC.) 10 February 2022 (2022-02-10)<br>    See paragraphs [0134]-[0140]; and claims 1-20. | 1-13 |
| A | WO 2022-030877 A1 (SAMSUNG ELECTRONICS CO., LTD.) 10 February 2022 (2022-02-10)<br>    See paragraphs [0009]-[0039]; and claims 1-15. | 1-13 |
| A | WO 2022-076887 A1 (CONVIDA WIRELESS, LLC et al.) 14 April 2022 (2022-04-14)<br>    See paragraphs [0069]-[0075]; and claims 1-20. | 1-13 |
| A | FUJITSU. Remaining issues of multi-PDSCH scheduling via a single DCI. R1-2201436, 3GPP TSG RAN WG1 Meeting #108-e. 14 February 2022.<br>    See sections 2.4 and 3. | 1-13 |

☐ Further documents are listed in the continuation of Box C.        ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **25 July 2023** | **26 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005741**

| Patent document cited in search report | | | Publication date (day/month/year) | Patent family member(s) | | | Publication date (day/month/year) |
|---|---|---|---|---|---|---|---|
| US | 2022-0104185 | A1 | 31 March 2022 | KR | 10-2019-0017675 | A | 20 February 2019 |
| | | | | US | 11206655 | B2 | 21 December 2021 |
| | | | | US | 2020-0221428 | A1 | 09 July 2020 |
| | | | | WO | 2019-031850 | A1 | 14 February 2019 |
| WO | 2022-031950 | A1 | 10 February 2022 | BR | 112023002070 | A2 | 02 May 2023 |
| | | | | CN | 115989708 | A | 18 April 2023 |
| | | | | EP | 4193547 | A1 | 14 June 2023 |
| | | | | TW | 202211702 | A | 16 March 2022 |
| WO | 2022-030877 | A1 | 10 February 2022 | AU | 2021-265998 | A1 | 04 November 2021 |
| | | | | AU | 2021-323163 | A1 | 10 February 2022 |
| | | | | CN | 111137617 | A | 12 May 2020 |
| | | | | CN | 111137617 | B | 26 January 2021 |
| | | | | CN | 111439204 | B | 28 January 2022 |
| | | | | CN | 111459723 | A | 28 July 2020 |
| | | | | CN | 111477176 | A | 31 July 2020 |
| | | | | CN | 111477176 | B | 25 June 2021 |
| | | | | CN | 111487710 | A | 04 August 2020 |
| | | | | CN | 111500058 | B | 16 November 2021 |
| | | | | CN | 111503697 | A | 07 August 2020 |
| | | | | CN | 111503699 | A | 07 August 2020 |
| | | | | CN | 113729277 | A | 03 December 2021 |
| | | | | CN | 113730603 | A | 03 December 2021 |
| | | | | CN | 113730603 | B | 24 January 2023 |
| | | | | CN | 113747172 | A | 03 December 2021 |
| | | | | CN | 113777521 | A | 10 December 2021 |
| | | | | CN | 113777521 | B | 09 May 2023 |
| | | | | CN | 113810886 | A | 17 December 2021 |
| | | | | CN | 113872697 | A | 31 December 2021 |
| | | | | CN | 114095119 | A | 25 February 2022 |
| | | | | CN | 212457032 | U | 02 February 2021 |
| | | | | CN | 212961763 | U | 13 April 2021 |
| | | | | EP | 3819791 | A2 | 12 May 2021 |
| | | | | EP | 3819791 | A3 | 06 October 2021 |
| | | | | EP | 3916575 | A2 | 01 December 2021 |
| | | | | EP | 3916575 | A3 | 23 March 2022 |
| | | | | EP | 3916584 | A1 | 01 December 2021 |
| | | | | EP | 3940408 | A1 | 19 January 2022 |
| | | | | EP | 3940408 | B1 | 26 October 2022 |
| | | | | EP | 3957408 | A1 | 23 February 2022 |
| | | | | EP | 3958091 | A1 | 23 February 2022 |
| | | | | EP | 4005411 | A1 | 01 June 2022 |
| | | | | EP | 4040048 | A1 | 10 August 2022 |
| | | | | EP | 4191444 | A1 | 07 June 2023 |
| | | | | EP | 4198709 | A1 | 21 June 2023 |
| | | | | EP | 4199489 | A1 | 21 June 2023 |
| | | | | JP | 2021-113050 | A | 05 August 2021 |
| | | | | JP | 2021-173997 | A | 01 November 2021 |
| | | | | JP | 2021-182166 | A | 25 November 2021 |
| | | | | JP | 2021-182392 | A | 25 November 2021 |
| | | | | JP | 2021-190084 | A | 13 December 2021 |

Form PCT/ISA/210 (patent family annex) (July 2022)

INTERNATIONAL SEARCH REPORT
Information on patent family members

International application No.

**PCT/KR2023/005741**

| Patent document cited in search report | Publication date (day/month/year) | Patent family member(s) | | | Publication date (day/month/year) |
|---|---|---|---|---|---|
| | | JP | 2022-031144 | A | 18 February 2022 |
| | | JP | 2022-553456 | A | 22 December 2022 |
| | | JP | 2023-503690 | A | 31 January 2023 |
| | | JP | 2023-525848 | A | 19 June 2023 |
| | | JP | 2023-525923 | A | 19 June 2023 |
| | | JP | 2023-526851 | A | 23 June 2023 |
| | | JP | 7098708 | B2 | 11 July 2022 |
| | | JP | 7200306 | B2 | 06 January 2023 |
| | | JP | 7222022 | B2 | 14 February 2023 |
| | | JP | 7268252 | B2 | 02 May 2023 |
| | | JP | 7280440 | B2 | 23 May 2023 |
| | | JP | 7291744 | B2 | 15 June 2023 |
| | | KR | 10-2022-0017827 | A | 14 February 2022 |
| | | KR | 10-2022-0088938 | A | 28 June 2022 |
| | | KR | 10-2022-0106821 | A | 29 July 2022 |
| | | KR | 10-2022-0129572 | A | 23 September 2022 |
| | | KR | 10-2023-0005803 | A | 10 January 2023 |
| | | KR | 10-2023-0045071 | A | 04 April 2023 |
| | | KR | 10-2023-0047409 | A | 07 April 2023 |
| | | KR | 10-2023-0074579 | A | 30 May 2023 |
| | | KR | 10-2526040 | B1 | 27 April 2023 |
| | | US | 11256922 | B1 | 22 February 2022 |
| | | US | 11413965 | B2 | 16 August 2022 |
| | | US | 11453812 | B2 | 27 September 2022 |
| | | US | 11489139 | B2 | 01 November 2022 |
| | | US | 11626335 | B2 | 11 April 2023 |
| | | US | 2021-0150933 | A1 | 20 May 2021 |
| | | US | 2021-0216561 | A1 | 15 July 2021 |
| | | US | 2021-0245745 | A1 | 12 August 2021 |
| | | US | 2021-0341092 | A1 | 04 November 2021 |
| | | US | 2021-0343213 | A1 | 04 November 2021 |
| | | US | 2021-0344146 | A1 | 04 November 2021 |
| | | US | 2023-0074692 | A1 | 09 March 2023 |
| | | US | 2023-0076257 | A1 | 09 March 2023 |
| | | US | 2023-0082641 | A1 | 16 March 2023 |
| | | US | 2023-0082924 | A1 | 16 March 2023 |
| | | US | 2023-0083832 | A1 | 16 March 2023 |
| | | US | 2023-0087407 | A1 | 23 March 2023 |
| | | US | 2023-0089744 | A1 | 23 March 2023 |
| | | US | 2023-0091077 | A1 | 23 March 2023 |
| | | US | 2023-0091607 | A1 | 23 March 2023 |
| | | US | 2023-0180315 | A1 | 08 June 2023 |
| | | US | 2023-0188401 | A1 | 15 June 2023 |
| | | US | 2023-0189273 | A1 | 15 June 2023 |
| | | US | 2023-0199541 | A1 | 22 June 2023 |
| | | WO | 2021-031809 | A1 | 25 February 2021 |
| | | WO | 2021-032092 | A1 | 25 February 2021 |
| | | WO | 2021-135439 | A1 | 08 July 2021 |
| | | WO | 2021-135462 | A1 | 08 July 2021 |
| | | WO | 2021-136407 | A1 | 08 July 2021 |

Form PCT/ISA/210 (patent family annex) (July 2022)

**EP 4 518 517 A1**

| INTERNATIONAL SEARCH REPORT | International application No. |
|---|---|
| Information on patent family members | **PCT/KR2023/005741** |

| Patent document cited in search report | Publication date (day/month/year) | Patent family member(s) | | | Publication date (day/month/year) |
|---|---|---|---|---|---|
| | | WO | 2021-139317 | A1 | 15 July 2021 |
| | | WO | 2021-151347 | A1 | 05 August 2021 |
| | | WO | 2021-217753 | A1 | 04 November 2021 |
| | | WO | 2022-027531 | A1 | 10 February 2022 |
| | | WO | 2022-027797 | A1 | 10 February 2022 |
| | | WO | 2022-027853 | A1 | 10 February 2022 |
| | | WO | 2022-027935 | A1 | 10 February 2022 |
| | | WO | 2022-027971 | A1 | 10 February 2022 |
| | | WO | 2022-028046 | A1 | 10 February 2022 |
| | | WO | 2022-028149 | A1 | 10 February 2022 |
| | | WO | 2022-028369 | A1 | 10 February 2022 |
| | | WO | 2022-028438 | A1 | 10 February 2022 |
| | | WO | 2022-030828 | A1 | 10 February 2022 |
| | | WO | 2022-030920 | A1 | 10 February 2022 |
| | | WO | 2022-037162 | A1 | 24 February 2022 |
| | | WO | 2022-037300 | A1 | 24 February 2022 |
| | | WO | 2022-037462 | A1 | 24 February 2022 |
| | | WO | 2022-048024 | A1 | 10 March 2022 |
| | | WO | 2022-048401 | A1 | 10 March 2022 |
| | | WO | 2022-048461 | A1 | 10 March 2022 |
| WO 2022-076887 A1 | 14 April 2022 | WO | 2022-076887 | A9 | 21 July 2022 |

Form PCT/ISA/210 (patent family annex) (July 2022)